(19) Europäisches Patentamt
European Patent Office
Office européen des brevets

(11) **EP 4 539 488 A1**

(12) **EUROPEAN PATENT APPLICATION**
published in accordance with Art. 153(4) EPC

(43) Date of publication:
**16.04.2025 Bulletin 2025/16**

(21) Application number: **23884477.3**

(22) Date of filing: **14.09.2023**

(51) International Patent Classification (IPC):
**H04N 23/667** (2023.01)   **H04N 23/63** (2023.01)
**H04N 23/741** (2023.01)

(52) Cooperative Patent Classification (CPC):
**H04N 23/741; H04N 23/667; H04N 23/71;**
**H04N 23/73; H04N 23/743; H04N 23/75**

(86) International application number:
**PCT/CN2023/118826**

(87) International publication number:
**WO 2024/093545 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022 CN 202211350498**

(71) Applicant: **Huawei Technologies Co., Ltd. Shenzhen, Guangdong 518129 (CN)**

(72) Inventors:
• **ZENG, Junjie**
  **Shenzhen, Guangdong 518129 (CN)**

• **WANG, Jun**
  **Shenzhen, Guangdong 518129 (CN)**
• **KONG, Desong**
  **Shenzhen, Guangdong 518129 (CN)**
• **ZHU, Qingrui**
  **Shenzhen, Guangdong 518129 (CN)**
• **QIAN, Kang**
  **Shenzhen, Guangdong 518129 (CN)**

(74) Representative: **Epping - Hermann - Fischer Patentanwaltsgesellschaft mbH Schloßschmidstraße 5 80639 München (DE)**

(54) **PHOTOGRAPHING METHOD AND ELECTRONIC DEVICE**

(57)     Embodiments of this application provide a photographing method and an electronic device. The photographing method is applied to an electronic device provided with a variable aperture. The photographing method includes: obtaining a preview image and ambient brightness information; determining, based on the preview image and the ambient brightness information, to enter an HDR photo mode or a non-HDR photo mode; separately outputting images with different exposure time and different f-numbers in the HDR photo mode and the non-HDR photo mode; and obtaining a taken image based on the images with the different exposure time and the different f-numbers. This can improve a photographing effect of the image.

**EP 4 539 488 A1**

200

S210: Obtain a preview image and ambient brightness information

S220: Determine, based on a proportion of a first area and a proportion of a second area in the preview image, whether to adjust an electronic device to an HDR photo mode

Y          N

S230a: Adjust the electronic device to the HDR photo mode

S240a: Determine whether a photographing scene of the preview image is a common scene

Y          N

Common scene

S280a: Determine whether the photographing scene of the preview image is an extremely bright scene or an extremely dark scene

Extremely bright scene          Extremely dark scene

S290a: Determine a second frame output strategy

S320a: Determine a third frame output strategy

S300a: Obtain frames of images according to the second frame output strategy in response to detecting a photographing operation

S330a: Obtain frames of images according to the third frame output strategy in response to detecting a photographing operation

S310a: Process the frames of images to obtain a taken image

S340a: Process the frames of images to obtain a taken image

S250a: Determine a first frame output strategy

S230b: Adjust the electronic device to a non-HDR photo mode

TO
FIG. 4B

TO
FIG. 4B

FIG. 4A

CONT.
FROM
FIG. 4A

CONT.
FROM
FIG. 4A

S260a: Obtain frames of images according to the first frame output strategy in response to detecting a photographing operation

S240b: Determine that the photographing scene of the preview image is a night scene or a non-night scene

S270a: Process the frames of images to obtain a taken image

Non-night scene

Night scene

S280b: Determine a fifth frame output strategy

S250b: Determine a fourth frame output strategy

S290b: Obtain frames of images according to the fifth frame output strategy in response to detecting a photographing operation

S260b: Obtain frames of images according to the fourth frame output strategy in response to detecting a photographing operation

S300b: Process the frames of images to obtain a taken image

S270b: Process the frames of images to obtain a taken image

FIG. 4B

## Description

This application claims priority to Chinese Patent Application No. 202211350498.5, filed with the China National Intellectual Property Administration on October 31, 2022 and entitled "PHOTOGRAPHING METHOD AND ELECTRONIC DEVICE", which is incorporated herein by reference in its entirety.

## TECHNICAL FIELD

Embodiments of this application relate to the terminal field, and more specifically, to a photographing method and an electronic device in the terminal field.

## BACKGROUND

With continuous development of photographing technologies and widespread use of electronic devices, a photographing function of an electronic device is increasingly favored by people. As a requirement of a user for image photographing quality gradually increases, requirements of the user for a high dynamic range (high dynamic range, HDR) scene like a night scene or a backlight scene, and an extremely dark or extremely bright scene also increase.

Currently, an electronic device like a mobile phone mainly takes a high dynamic range image through multi-frame image fusion. However, a part of the image is still overexposed or underexposed due to a limited dynamic range. This severely affects a final photographing effect.

## SUMMARY

Embodiments of this application provide a photographing method, a photographing apparatus, and an electronic device, to improve an image photographing effect.

According to a first aspect, a photographing method is provided. The photographing method is applied to an electronic device, the electronic device is provided with a variable aperture, and a default f-number used when the electronic device enables a photo mode is a first f-number. The photographing method includes: obtaining a preview image and ambient brightness information, where the preview image is an image obtained by using a first ISO, first exposure time, and the first f-number, and the ambient brightness information indicates a brightness value of an environment in which the electronic device is currently located; when a proportion of a first area in the preview image is greater than or equal to a first threshold, and a proportion of a second area in the preview image is greater than or equal to a second threshold, adjusting the electronic device to a high dynamic range HDR photo mode, where the first area includes at least two pixels whose pixel values are greater than a third threshold in the preview image, the second area includes at least two pixels whose pixel values are less than a fourth threshold in the preview image, and the fourth threshold is less than the third threshold; and in response to detecting a photographing operation, when the first ISO is a minimum ISO of the electronic device, the first exposure time is minimum exposure time of the electronic device, and the brightness value of the environment in which the electronic device is currently located is greater than or equal to a fifth threshold, obtaining a first image, a second image, and a third image, and obtaining a taken image based on the first image, the second image, and the third image; or in response to detecting a photographing operation, when the first ISO is a maximum ISO of the electronic device, the first exposure time is maximum exposure time of the electronic device, and the brightness value of the environment in which the electronic device is currently located is less than a sixth threshold, obtaining a second image and a fourth image, and obtaining a taken image based on the second image and the fourth image, where the first image is an image obtained by using a second f-number and second exposure time, and the second f-number is greater than the first f-number; the second image is an image obtained by using a third f-number and third exposure time, the third exposure time is greater than the second exposure time, and the third f-number is different from the second f-number, a fourth f-number, and a fifth f-number; the third image is an image obtained by using the fourth f-number and fourth exposure time, the fourth f-number is less than the first f-number, and the fourth exposure time is greater than the third exposure time; and the fourth image is an image obtained by using the fifth f-number and fifth exposure time, the fifth f-number is less than the first f-number, and the fifth exposure time is greater than the third exposure time.

In this embodiment of this application, when the proportion of the first area in the preview image is greater than or equal to the first threshold, and the proportion of the second area in the preview image is greater than or equal to the second threshold, that is, when both a proportion of a bright area and a proportion of a dark area in the preview image are large, it may be considered that the preview image has an HDR. In this way, the electronic device is adjusted to the HDR photo mode, so that the obtained taken image has the HDR.

When the first ISO of the preview image is the minimum ISO of the electronic device, the first exposure time of the preview image is the minimum exposure time of the electronic device, and the brightness value of the environment in which the electronic device is currently located is greater than or equal to the fifth threshold, it is considered that the preview image obtained by using the default first f-number, the first exposure time, and the first ISO is still overexposed. In this case, the first image is obtained by using the second f-number greater than the first f-number. In this way, an amount of admitted light on the electronic device can be reduced when the first image is obtained, so that the obtained first image is not overexposed. In addition, the third image is obtained by using the fourth f-number less than the first f-number. In this way, an amount of admitted light on the electronic device can be increased when the third image is obtained, so that the obtained third image is not underexposed. Further, the image obtained based on the first image, the second image, and the third image has rich details in a bright area and a dark area and has high definition.

When the first ISO of the preview image is the maximum ISO of the electronic device, the first exposure time of the preview image is the maximum exposure time of the electronic device, and the brightness value of the environment in which the electronic device is currently located is less than the sixth threshold, it is considered that the preview image obtained by using the default first f-number, the first exposure time, and the first ISO is still underexposed. In this case, the fourth image is obtained by using the fifth f-number less than the first f-number. In this way, an amount of admitted light on the electronic device can be increased when the fourth image is obtained, so that the obtained fourth image is not underexposed. Further, the image obtained based on the second image and the fourth image has rich details in a bright area and a dark area and has high definition.

With reference to the first aspect, in some implementations of the first aspect, the third f-number is an f-number corresponding to a brightness value of a focus area in the preview image.

The third f-number of the second image is determined based on the brightness value of the focus area in the preview image. This can ensure basic brightness of a target in the second image. With reference to the first aspect, in some implementations of the first aspect, the fourth f-number is a minimum f-number of the electronic device; or the fifth f-number is a minimum f-number of the electronic device.

The fourth f-number of the third image is set to the minimum f-number of the electronic device. In this way, an amount of admitted light on the electronic device can reach the maximum when the third image is obtained. This can avoid a problem that the obtained third image is underexposed, and can enrich details of a dark area in the third image.

The fifth f-number of the fourth image is set to the minimum f-number of the electronic device. In this way, an amount of admitted light on the electronic device can reach the maximum when the fourth image is obtained. This can avoid a problem that the obtained fourth image is underexposed, and can enrich details of a dark area in the fourth image.

With reference to the first aspect, in some implementations of the first aspect, when the first ISO is the minimum ISO of the electronic device, the first exposure time is the minimum exposure time of the electronic device, and the brightness value of the environment in which the electronic device is currently located is greater than or equal to the fifth threshold, a quantity of first images is $N_1$, $N_1$ is greater than or equal to 2, a quantity of second images is $N_{21}$, $N_{21}$ is greater than or equal to 2, and a quantity of third images is $N_3$; and the method further includes: obtaining status information of the electronic device, where the status information indicates whether a photographing status of the electronic device is stable; and when the status information indicates that the photographing status of the electronic device is stable, determining that $N_3$ is an integer greater than or equal to 2; or when the status information indicates that the photographing status of the electronic device is unstable, determining that $N_3$ is a positive integer less than or equal to 2.

A frame output quantity of the first image may be as large as possible, for example, at least two frames. This can enrich details of a bright area in the first image, and reduce noise of the first image.

A frame output quantity of the second image may be as large as possible, for example, at least two frames. This can enrich details of a bright area in the second image, and reduce noise of the second image.

When the photographing status of the electronic device is stable, a frame output quantity of the third image may be as large as possible, for example, at least two frames. This can enrich details of a dark area in the third image or the fourth image, and can reduce noise of the third image. However, when the photographing status of the electronic device is unstable, a frame output quantity of the third image may be as small as possible, for example, a maximum of two frames. This ensures image quality of the third image.

With reference to the first aspect, in some implementations of the first aspect, the obtaining a taken image based on the first image, the second image, and the third image includes: obtaining the taken image based on the first image, the second image, the third image, and a fifth image, where the fifth image is an image obtained by using a sixth f-number and sixth exposure time, the sixth f-number is greater than the second f-number, and the sixth exposure time is less than the second exposure time.

When the preview image obtained by using the default first f-number, the first exposure time, and the first ISO is still overexposed, the fifth image with other exposure time is added, so that a dynamic range of the taken image is further increased. In addition, the sixth f-number used for the fifth image is set to be greater than the second f-number. In this way, an amount of admitted light on the electronic device can be reduced when the fifth image is obtained. This can avoid a problem that the obtained fifth image is overexposed, and can extend a depth of field.

With reference to the first aspect, in some implementations of the first aspect, the sixth f-number is a maximum f-number of the electronic device.

The sixth f-number of the fifth image is set to the maximum f-number of the electronic device. In this way, an amount of admitted light on the electronic device can reach the minimum when the fifth image is obtained. This can further avoid the problem that the obtained fifth image is overexposed, and can enrich details of a dark area in the fifth image.

With reference to the first aspect, in some implementations of the first aspect, a quantity of fifth images is $N_5$, and $N_5$ is greater than or equal to 2.

A frame output quantity of the fifth image is as large as possible, for example, at least two frames. This can enrich details of a bright area in the fifth image, and reduce noise of the fifth image. Further, definition of the taken image can be improved.

With reference to the first aspect, in some implementations of the first aspect, the obtaining a taken image based on the first image, the second image, and the third image includes: obtaining the taken image based on the first image, the second image, the third image, and a sixth image, where the sixth image is an image obtained by using a seventh f-number and the fourth exposure time, and the seventh f-number is greater than the fourth f-number.

In this way, the third image and the sixth image that have different f-numbers are output at the same exposure time, overall brightness of the output third image with a small f-number (the fourth f-number) is better, and a depth of field of the output sixth image with a large f-number (the seventh f-number) is larger. Therefore, an image subsequently obtained by fusing the output third image with the small f-number (the fourth f-number) and the sixth image with the large f-number (the seventh f-number) has rich details in a dark area, has an extended depth of field, and has low noise. Further, definition of the taken image can be improved.

With reference to the first aspect, in some implementations of the first aspect, a quantity of sixth images is $N_6$, and the method further includes: when the photographing status of the electronic device is stable, determining that $N_6$ is an integer greater than or equal to 2; or when the photographing status of the electronic device is unstable, determining that $N_6$ is a positive integer less than or equal to 2.

When the photographing status of the electronic device is stable, a frame output quantity of the sixth image with the seventh f-number may be as large as possible, for example, at least two frames. This can enrich details of a dark area in the sixth image, and can reduce noise of the sixth image. However, when the photographing status of the electronic device is unstable, a frame output quantity of the sixth image with the seventh f-number may be as small as possible, for example, a maximum of two frames. This ensures image quality of the sixth image.

With reference to the first aspect, in some implementations of the first aspect, when the first ISO is the maximum ISO of the electronic device, the first exposure time is the maximum exposure time of the electronic device, and the brightness value of the environment in which the electronic device is currently located is less than the sixth threshold, a quantity of second images is $N_{22}$, $N_{22}$ is greater than or equal to 2, and a quantity of

fourth images is $N_4$; and the method further includes: when a photographing status of the electronic device is stable, determining that $N_4$ is an integer greater than or equal to 2; or when a photographing status of the electronic device is unstable, determining that $N_4$ is equal to 1.

A frame output quantity of the second image may be as large as possible, for example, at least two frames. This can enrich details of a bright area in the second image, and reduce noise of the second image.

When the photographing status of the electronic device is stable, a frame output quantity of the fourth image may be as large as possible, for example, at least two frames. This can enrich the details of the dark area in the fourth image, and can reduce noise of the fourth image. However, when the photographing status of the electronic device is unstable, a frame output quantity of the fourth image may be as small as possible, for example, a maximum of one frame. This ensures image quality of the fourth image.

With reference to the first aspect, in some implementations of the first aspect, the obtaining a taken image based on the second image and the fourth image includes: obtaining the taken image based on the second image, the fourth image, and a seventh image, where the seventh image is an image obtained by using an eighth f-number and the fifth exposure time, and the eighth f-number is greater than the fifth f-number.

The fourth image and the seventh image that have different f-numbers are output at the same exposure time, overall brightness of the output fourth image with a small f-number (the fifth f-number) is better, and a depth of field of the output seventh image with a large f-number (the eighth f-number) is larger. Therefore, an image subsequently obtained by fusing the output fourth image with the small f-number (the fifth f-number) and the seventh image with the large f-number (the eighth f-number) has rich details in a dark area, has an extended depth of field, and has low noise. Further, definition of the taken image can be improved.

With reference to the first aspect, in some implementations of the first aspect, a quantity of seventh images is $N_7$, and the method further includes: when the photographing status of the electronic device is unstable, determining that $N_7$ is equal to 1.

Alternatively, when the photographing status of the electronic device is unstable, a frame output quantity $N_7$ of the seventh image may be as small as possible, for example, a maximum of one frame. This ensures image quality of the seventh image.

According to a second aspect, a photographing method is provided. The photographing method is applied to an electronic device, the electronic device is provided with a variable aperture, and a default f-number used when the electronic device enables a photo mode is a first f-number. The photographing method includes: obtaining a preview image and ambient brightness information, where the preview image is an image obtained by using the first f-number, and the ambient brightness information indicates a brightness value of an environment in which the electronic device is currently located; when a proportion of a first area in the preview image is less than a first threshold, and/or a proportion of a second area in the preview image is less than a second threshold, adjusting the electronic device to a non-high dynamic range HDR photo mode, where the first area includes at least two pixels whose pixel values are greater than a third threshold in the preview image, the second area includes at least two pixels whose pixel values are less than a fourth threshold in the preview image, and the fourth threshold is less than the third threshold; and in response to detecting a photographing operation, when the brightness value of the environment in which the electronic device is currently located is less than or equal to a fifth threshold, obtaining an eighth image and a ninth image, and obtaining a taken image based on the eighth image and the ninth image; or in response to detecting a photographing operation, when the brightness value of the environment in which the electronic device is currently located is greater than a fifth threshold, obtaining an eighth image, and obtaining a taken image based on the eighth image, where the eighth image is an image obtained by using a ninth f-number and third exposure time; and the ninth image is an image obtained by using a tenth f-number and fourth exposure time, the tenth f-number is less than the first f-number, and the fourth exposure time is greater than the third exposure time.

In this embodiment of this application, in a photographing process, an f-number of the electronic device is adjusted, for example, the first f-number is adjusted to the ninth f-number to obtain the eighth image. In this way, when the eighth image is obtained, the obtained eighth image is not overexposed or underexposed. In addition, the ninth image is obtained by using the tenth f-number less than the first f-number. In this way, an amount of admitted light on the electronic device can be increased when the ninth image is obtained, so that the obtained ninth image is not underexposed. Further, the image obtained based on the eighth image and the ninth image has rich details in a bright area and a dark area and has high definition. This improves an image photographing effect.

With reference to the second aspect, in some implementations of the second aspect, the tenth f-number is a minimum f-number of the electronic device; or the ninth f-number is an f-number corresponding to a brightness value of a focus area in the preview image.

The tenth f-number of the ninth image is set to the minimum f-number of the electronic device. In this way, an amount of admitted light on the electronic device can reach the maximum when the ninth image is obtained. This can further avoid the problem that the obtained ninth image is underexposed, and can enrich details of a dark area in the ninth image.

The ninth f-number of the eighth image is determined based on the brightness value of the focus area in the preview image. This can ensure basic brightness of a target in the eighth image.

With reference to the second aspect, in some implementations of the second aspect, when the brightness value of the environment in which the electronic device is currently located is less than or equal to the fifth threshold, a quantity of eighth images is $N_{81}$, $N_{81}$ is greater than or equal to 2, and a quantity of ninth images is $N_9$; and the method further includes: obtaining status information of the electronic device, where the status information indicates whether a photographing status of the electronic device is stable; and when the status information indicates that the photographing status of the electronic device is stable, determining that $N_9$ is an integer greater than or equal to 2; or when the status information indicates that the photographing status of the electronic device is unstable, determining that $N_9$ is a positive integer less than or equal to 2.

When the photographing status of the electronic device is stable, a frame output quantity of the ninth image may be as large as possible, for example, at least two frames. This can enrich the details of the dark area in the ninth image, and can reduce noise of the ninth image. However, when the photographing status of the electronic device is unstable, a frame output quantity of the ninth image may be as small as possible, for example, a maximum of two frames. This ensures image quality of the ninth image.

With reference to the second aspect, in some implementations of the second aspect, the obtaining a taken image based on the eighth image and the ninth image includes: obtaining the taken image based on the eighth image, the ninth image, and a tenth image, where the tenth image is an image obtained by using an eleventh f-number and the fourth exposure time, and the eleventh f-number is greater than the tenth f-number.

The ninth image and the tenth image that have different f-numbers are output at the same exposure time, overall brightness of the output ninth image with a small f-number (the tenth f-number) is better, and a depth of field of the output tenth image with a large f-number (the eleventh f-number) is larger. Therefore, an image subsequently obtained by fusing the output ninth image with the small f-number (the tenth f-number) and the tenth image with the large f-number (the eleventh f-number) has rich details in a dark area, has an extended depth of field, and has low noise. Further, definition of the taken image can be improved.

With reference to the second aspect, in some implementations of the second aspect, a quantity of tenth images is $N_{10}$, and the method further includes: when the status information indicates that the photographing status of the electronic device is stable, determining that $N_{10}$ is an integer greater than or equal to 2; or when the status information indicates that the photographing status of the electronic device is unstable, determining that $N_{10}$ is a positive integer less than or equal to 2. When the photographing status of the electronic device is stable, a frame output quantity of the tenth image may be as large as possible, for example, at least two frames. This can enrich details of a dark area in the tenth image, and can reduce noise of the tenth image. However, when the photographing status of the electronic device is unstable, a frame output quantity of the tenth image may be as small as possible, for example, a maximum of two frames. This ensures image quality of the tenth image.

According to a third aspect, an electronic device is provided. The electronic device is provided with a variable aperture, and a default f-number used when the electronic device enables a photo mode is a first f-number. The electronic device includes: an obtaining unit, configured to obtain a preview image and ambient brightness information, where the preview image is an image obtained by using a first ISO, first exposure time, and the first f-number, and the ambient brightness information indicates a brightness value of an environment in which the electronic device is currently located; and a processing unit, configured to: when a proportion of a first area in the preview image is greater than or equal to a first threshold, and a proportion of a second area in the preview image is greater than or equal to a second threshold, adjust the electronic device to a high dynamic range HDR photo mode, where the first area includes at least two pixels whose pixel values are greater than a third threshold in the preview image, the second area includes at least two pixels whose pixel values are less than a fourth threshold in the preview image, and the fourth threshold is less than the third threshold; and in response to detecting a photographing operation, when the first ISO is a minimum ISO of the electronic device, the first exposure time is minimum exposure time of the electronic device, and the brightness value of the environment in which the electronic device is currently located is greater than or equal to a fifth threshold, obtain a first image, a second image, and a third image, and obtain a taken image based on the first image, the second image, and the third image; or in response to detecting a photographing operation, when the first ISO is a maximum ISO of the electronic device, the first exposure time is maximum exposure time of the electronic device, and the brightness value of the environment in which the electronic device is currently located is less than a sixth threshold, obtain a second image and a fourth image, and obtain a taken image based on the second image and the fourth image, where the first image is an image obtained by using a second f-number and second exposure time, and the second f-number is greater than the first f-number; the second image is an image obtained by using a third f-number and third exposure time, the third exposure time is greater than the second exposure time, and the third f-number is different from the second f-number, a fourth f-number, and a fifth f-number; the third image is an image obtained by using the fourth f-number and fourth exposure time, the fourth f-number is less than the first f-number, and the fourth exposure time is greater than the third exposure time; and the fourth image is an image obtained by using the fifth f-number and fifth exposure time, the fifth f-number is less than the first f-number, and the fifth exposure time is greater than the third exposure time.

With reference to the third aspect, in some implementations of the third aspect, the third f-number is an f-number corresponding to a brightness value of a focus area in the preview image.

With reference to the third aspect, in some implementations of the third aspect, the fourth f-number is a minimum f-number of the electronic device; or the fifth f-number is a minimum f-number of the electronic device.

With reference to the third aspect, in some implementations of the third aspect, when the first ISO is the minimum ISO of the electronic device, the first exposure time is the minimum exposure time of the electronic device, and the brightness value of the environment in which the electronic device is currently located is greater than or equal to the fifth threshold, a quantity of first images is $N_1$, $N_1$ is greater than or equal to 2, a quantity of second images is $N_{21}$, $N_{21}$ is greater than or equal to 2, and a quantity of third images is $N_3$; and the obtaining unit is further configured to: obtain status information of the electronic device, where the status information indicates whether a photographing status of the electronic device is stable; and when the status information indicates that the photographing status of the electronic device is stable, determine that $N_3$ is an integer greater than or equal to 2; or when the status information indicates that the photographing status of the electronic device is unstable, determine that $N_3$ is a positive integer less than or equal to 2. With reference to the third aspect, in some implementations of the third aspect, the obtaining unit is further configured to obtain the taken image based on the first image, the second image, the third image, and a fifth image, where the fifth image is an image obtained by using a sixth f-number and sixth exposure time, the sixth f-number is greater than the second f-number, and the sixth exposure time is less than the second exposure time.

With reference to the third aspect, in some implementations of the third aspect, the sixth f-number is a maximum f-number of the electronic device.

With reference to the third aspect, in some implementations of the third aspect, a quantity of fifth images is $N_5$, and $N_5$ is greater than or equal to 2.

With reference to the third aspect, in some implementations of the third aspect, the obtaining unit is further configured to obtain the taken image based on the first image, the second image, the third image, and a sixth image, where the sixth image is an image obtained by using a seventh f-number and the fourth exposure time, the seventh f-number is greater than the fourth f-number.

With reference to the third aspect, in some implementations of the third aspect, a quantity of sixth images is $N_6$, and the processing unit is further configured to: when the photographing status of the electronic device is stable, determine that $N_6$ is an integer greater than or equal to 2; or when the photographing status of the electronic device is unstable, determine that $N_6$ is a positive integer less than or equal to 2.

With reference to the third aspect, in some implementations of the third aspect, when the first ISO is the maximum ISO of the electronic device, the first exposure time is the maximum exposure time of the electronic device, and the brightness value of the environment in which the electronic device is currently located is less than the sixth threshold, a quantity of second images is $N_{22}$, $N_{22}$ is greater than or equal to 2, and a quantity of fourth images is $N_4$; and the processing unit is further configured to: when the photographing status of the electronic device is stable, determine that $N_4$ is an integer greater than or equal to 2; or when the photographing status of the electronic device is unstable, determine that $N_4$ is equal to 1.

With reference to the third aspect, in some implementations of the third aspect, the obtaining unit is further configured to obtain the taken image based on the second image, the fourth image, and a seventh image, where the seventh image is an image obtained by using an eighth f-number and the fifth exposure time, and the eighth f-number is greater than the fifth f-number.

With reference to the third aspect, in some implementations of the third aspect, a quantity of seventh images is $N_7$, and the processing unit is further configured to: when the photographing status of the electronic device is unstable, determine that $N_7$ is equal to 1.

For technical effects of the third aspect and the possible implementations, refer to related descriptions of the first aspect. Details are not described herein.

According to a fourth aspect, an electronic device is provided. The electronic device is provided with a variable aperture, and a default f-number used when the electronic device enables a photo mode is a first f-number. The electronic device includes: an obtaining unit, configured to obtain a preview image and ambient brightness information, where the preview image is an image obtained by using the first f-number, and the ambient brightness information indicates a brightness value of an environment in which the electronic device is currently located; and a processing unit, configured to: when a proportion of a first area in the preview image is less than a first threshold, and/or a proportion of a second area in the preview image is less than a second threshold, adjust the electronic device to a non-high dynamic range HDR photo mode, where the first area includes at least two pixels whose pixel values are greater than a third threshold in the preview image, the second area includes at least two pixels whose pixel values are less than a fourth threshold in the preview image, and the fourth threshold is less than the third threshold; and in response to detecting a photographing operation, when the brightness value of the environment in which the electronic device is currently located is less than or equal to a fifth threshold, obtain an eighth image and a ninth image, and obtain a taken image based on the eighth image and the ninth image; or in response to detecting a photographing operation, when the brightness value of the environment in which the electronic device is currently located is greater than a fifth threshold, obtain an eighth image, and obtain a taken image based on the eighth image, where the eighth image is an image obtained by using a ninth f-number and third exposure time; and the ninth image is an image obtained by using a tenth f-number and fourth exposure time, the tenth f-number is less than the first f-number, and the fourth exposure time is greater than the third exposure time.

With reference to the fourth aspect, in some implementations of the fourth aspect, the tenth f-number is a minimum f-number of the electronic device; or the ninth f-number is an f-number corresponding to a brightness value of a focus area in the preview image.

With reference to the fourth aspect, in some implementations of the fourth aspect, when the brightness value of the environment in which the electronic device is currently located is less than or equal to the fifth threshold, a quantity of eighth images is $N_{81}$, $N_{81}$ is greater than or equal to 2, and a quantity of ninth images is $N_9$; the obtaining unit is further configured to obtain status information of the electronic device, where the status information indicates whether a photographing status of the electronic device is stable; and the processing unit is further configured to: when the status information indicates that the photographing status of the electronic device is stable, determine that $N_9$ is an integer greater than or equal to 2; or when the status information indicates that the photographing status of the electronic device is unstable, determine that $N_9$ is a positive integer less than or equal to 2.

With reference to the fourth aspect, in some implementations of the fourth aspect, the obtaining unit is further configured to obtain the taken image based on the eighth image, the ninth image, and a tenth image, where the tenth image is an image obtained by using an eleventh f-number and the fourth exposure time, and the eleventh f-number is greater than the tenth f-number.

With reference to the fourth aspect, in some implementations of the fourth aspect, a quantity of tenth images is $N_{10}$, and the processing unit is specifically configured to: when the status information indicates that the photographing status of the electronic device is stable, determine that $N_{10}$ is an integer greater than or equal to 2; or when the status information indicates that the photographing status of the electronic device is unstable, determine that $N_{10}$ is a positive integer less than or equal to 2.

For technical effects of the fourth aspect and the possible implementations, refer to related descriptions of the second aspect. Details are not described herein.

According to a fifth aspect, an electronic device is provided, and includes one or more processors and one or more memories. The one or more memories store one or more computer programs, and the one or more computer programs include instructions. When the instructions are executed by the one or more processors, the electronic device is enabled to perform the photographing method according to any one of the first aspect and the possible implementations of the first aspect, or perform the photographing method according to any one of the second aspect and the possible implementations of the second aspect.

According to a sixth aspect, a computer-readable storage medium is provided, and includes computer instructions. When the computer instructions are run on an electronic device, the electronic device is enabled to perform the photographing method according to any one of the first aspect and the possible implementations of the first aspect, or perform the photographing method according to any one of the second aspect and the possible implementations of the second aspect. According to a seventh aspect, a computer program product including instructions is provided. When the computer program product runs on a computer, the computer is enabled to perform the photographing method according to any one of the first aspect and the possible implementations of the first aspect, or perform the photographing method according to any one of the second aspect and the possible implementations of the second aspect.

According to an eighth aspect, a chip is provided. The chip includes a processor and a data interface. The processor reads, through the data interface, instructions stored in a memory, to perform the photographing method according to any one of the first aspect and the possible implementations of the first aspect, or perform the photographing method according to any one of the second aspect and the possible implementations of the second aspect.

Optionally, in an implementation, the chip may further include a memory, the memory stores instructions, and the processor is configured to execute the instructions stored in the memory. When the instructions are executed, the processor is configured to perform the shooting method according to any one of the first aspect and the possible implementations of the first aspect, or perform the shooting method according to any one of the second aspect and the possible implementations of the second aspect.

The chip may specifically be a field-programmable gate array or an application-specific integrated circuit.

## BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3 is a diagram of a group of images according to an embodiment of this application;
FIG. 4A and FIG. 4B are a schematic flowchart of a photographing method according to an embodiment of this application;
FIG. 5 to FIG. 10 each are a diagram of a value of an f-number of an image according to an embodiment of this application;
FIG. 11 is a block diagram of an electronic device according to an embodiment of this application; and
FIG. 12 is a diagram of a structure of another electronic device according to an embodiment of this application.

## DESCRIPTION OF EMBODIMENTS

The following describes technical solutions of embodiments in this application with reference to accompanying drawings.

In descriptions of embodiments of this application, "/" means "or" unless otherwise specified. For example, A/B may represent A or B. In this specification, "and/or" describes only an association relationship for describing associated objects, and represents that three relationships may exist. For example, A and/or B may represent the following three cases: Only A exists, both A and B exist, and only B exists. In addition, in the descriptions of embodiments of this application, "multiple" or "a plurality of" means two or more than two.

The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

An extremely bright scene in embodiments of this application may be considered as an extreme scene of a non-night scene. Similarly, an extremely dark scene may also be considered as an extreme scene of a night scene.

The night scene and the non-night scene in embodiments of this application are distinguished by an electronic device based on environment brightness perceived by human eyes. In other words, the electronic device distinguishes between the night scene and the non-night scene by quantizing perception of the human eyes.

Specific values of a first threshold to a ninth threshold in embodiments of this application may be set based on historical experience. This is not limited in embodiments of this application.

For ease of understanding of embodiments of this application, terms in embodiments of this application are first described briefly.

1. ISO (international standards organization)

An ISO is sensitivity of an image captured by an image capture apparatus to light. A larger ISO value indicates higher sensitivity to light, and a smaller ISO value indicates lower sensitivity to light.

It should be noted that, in embodiments of this application, value ranges of ISOs of different electronic devices may be the same or may be different. This is not limited in this application.

In addition, in embodiments of this application, value ranges of ISOs of different cameras may be the same or may be different. This is not limited in this application. For example, a value range of an ISO of a main camera is 50 to 6400, a value range of an ISO of a telephoto camera is 50 to 6400, and a value range of an ISO of a wide-angle camera is 50 to 1600 or 50 to 3200.

2. Depth of field (depth of field, DoF)

A depth of field is a front-to-back distance range of a photographed object that is measured based on imaging at a front edge of an image capture apparatus that can obtain a clear image.

3. Exposure time (exposure time)

Exposure time is time at which a shutter needs to be opened to project light onto a photosensitive surface of a photosensitive material of an image sensor of a camera in a camera photographing process.

4. Aperture

An aperture (aperture) is an apparatus configured to control an amount of light entering a photosensitive surface of a body through a lens. A size of the aperture controls an amount of admitted light, and also controls a background blurring degree (that is, controls a depth of field of an image). A larger aperture indicates a larger amount of admitted light and a brighter image. A smaller aperture indicates a smaller amount of admitted light and a darker image. A larger aperture indicates a shallower depth of field and more obvious background blurring (in other words, a more blurred background). A smaller aperture indicates a deeper depth of field and a clearer background. The aperture may be classified into a fixed aperture and a variable aperture. A size of the fixed aperture cannot be arbitrarily changed. A size of the variable aperture is adjustable, so that an amount of admitted light can be adjusted. The variable aperture may bring more photographing advantages. For example, a user or an apparatus equipped with an aperture may freely control a size of the aperture, to freely control exposure time and a background blurring degree. The size of the aperture described herein is a size of an aperture through which light passes (namely, an aperture diameter).

An f-number indicates a size of an aperture, and is usually represented by F. The f-number is a ratio of a focal length of a lens to an aperture diameter, and is expressed by a formula: F (f-number) = f (focal length of the lens)/D (aperture diameter). An amount of admitted light is represented as an area of an aperture corresponding to a light transmission diameter, and is represented by a formula: S (amount of admitted light) = $\pi$ (D/2)$^2$. An f-number (namely, F value) is inversely proportional to a size of an aperture. A larger aperture indicates a smaller f-number. Usually, common f-number sequences are as follows: F1.4, F2, F2.8, F4, F5.6, F8, F11, F16, F22, F32, F44, and F64. For two adjacent f-numbers, an amount of admitted light of the former is twice that of the latter. For example, if the f-number is 1.4, a common representation manner is F 1.4 or F/1.4. An aperture size also indicates a size of an aperture. The aperture size is directly proportional to the size of the aperture. A larger aperture indicates a larger aperture size. In this way, an aperture size is inversely proportional to an f-number, that is, a larger aperture indicates a larger aperture size and a smaller f-number. For example, an aperture size corresponding to F2 is less than an aperture size corresponding to F1.4, and an aperture size represented by F2 is less than an aperture size corresponding to F1.4.

It should be noted that, first, value ranges of f-numbers of different electronic devices may be the same or may be different. This is not limited in this application.

Second, value ranges of f-numbers of different cameras may be the same or may be different. This is not limited in this application.

Third, if an electronic device includes a plurality of cameras, some or all of the plurality of cameras may use a variable aperture. This is not limited in this application.

For example, if the electronic device includes a main camera, a telephoto camera, and a wide-angle camera. The main camera may use a variable aperture, for example, a value range of an f-number of the main camera may be F1.4 to F4. The telephoto camera may use a fixed aperture, for example, an f-number of the telephoto camera may be F3.4. The wide-angle camera may also use a fixed aperture, for example, an f-number of the wide-angle camera may be F2.2.

The electronic device in embodiments of this application may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (for example, a Bluetooth headset or a smartwatch), a home device (for example, a smart door lock or a smart peephole), a terminal device in a 5G network, a terminal device in a future evolved public land mobile network (public land mobile network, PLMN), or the like. This is not limited in embodiments of this application.

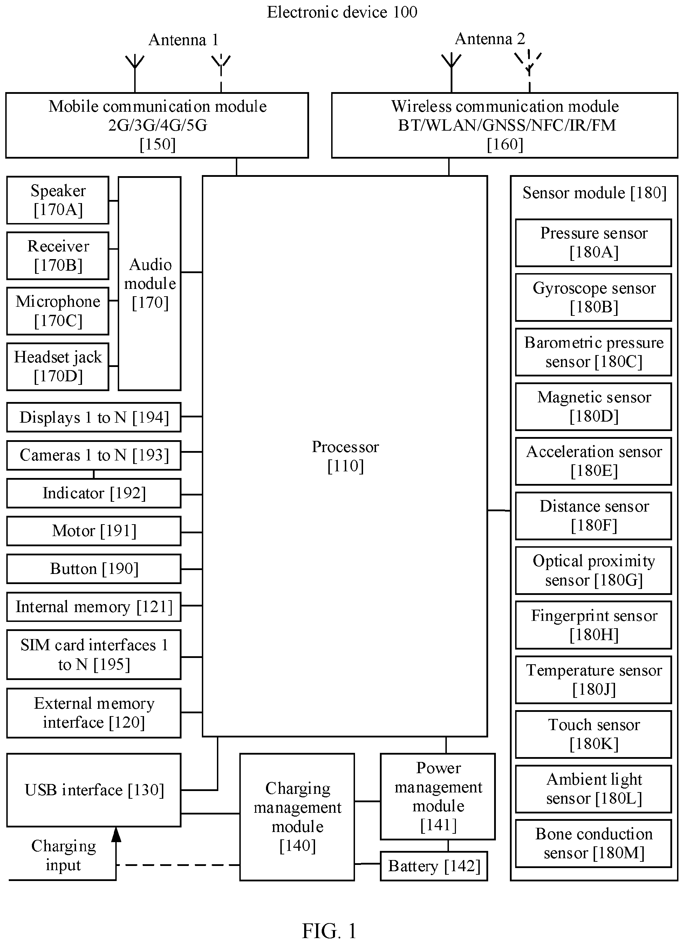

For example, FIG. 1 is a diagram of a structure of an electronic device 100 according to an embodiment of this application.

For example, as shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or an arrangement of different components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, to improve system efficiency.

In some embodiments, the processor 110 may include one or more interfaces. The interface may include a mobile industry processor interface (mobile industry processor interface, MIPI), a general-purpose input/output (general-purpose input/output, GPIO) interface, or the like. The MIPI interface may be configured to connect the processor 110 to a peripheral component like the display 194 or the camera 193. The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like.

It may be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information. The display 194 is configured to display an image, a video, and the like.

The electronic device 100 may implement a photographing function through the ISP, the camera 193, the video codec, the GPU, the display 194, the application processor, and the like.

The external memory interface 120 may be configured to connect to an external memory card, for example, a micro SD card, to extend a storage capability of the electronic device 100. The internal memory 121 may be configured to store computer-executable program code. The executable program code includes instructions. The processor 110 runs the instructions stored in the internal memory 121, to perform various function applications of the electronic device 100 and data processing.

A software system of the electronic device 100 shown in FIG. 1 may use a layered architecture, an event-driven architecture, a microkernel architecture, a microservice architecture, or a cloud architecture.

The software system is not limited in embodiments of this application. For example, the software system may be an Android® system, an iOS® system, or a HarmonyOS® system.

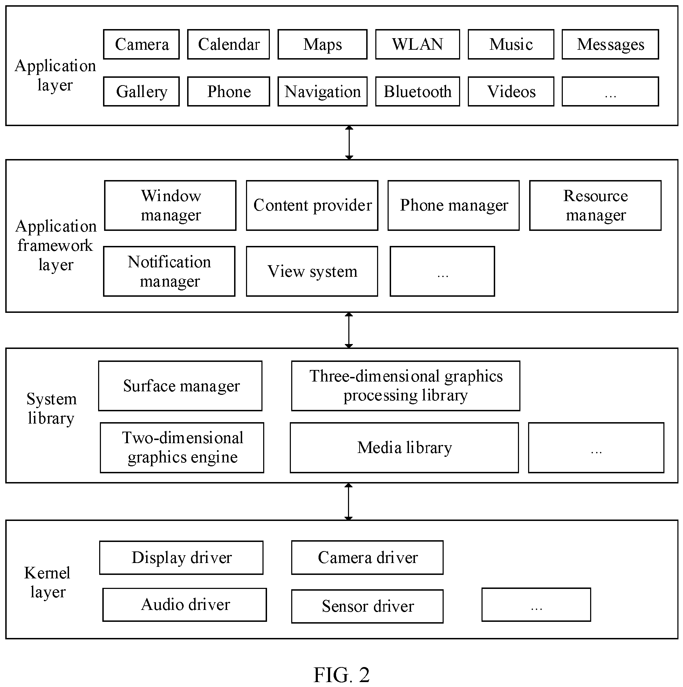

With reference to FIG. 2, the following describes a software structure of the electronic device 100 by using the Android® system with the layered architecture as an example.

FIG. 2 is a block diagram of the software structure of the electronic device 100 in this embodiment of this application. In the layered architecture, software is divided into several layers, and each layer has a clear role and task. The layers communicate with each other through a software interface. In some embodiments, the Android system is divided into four layers: an application layer, an application framework layer, a system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a content provider, a view system, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a view for displaying a text and a view for displaying an image.

The application layer and the application framework layer run on the virtual machine.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Compared with a single-lens reflex camera, the electronic device in this application is more intelligent and flexible in photographing. Therefore, the electronic device in this application is favored by a large quantity of users. In daily use, a photographing function of the electronic device used by a user always accounts for a quite large proportion.

However, an electronic device like a mobile phone mainly takes a high dynamic range image through multi-frame image fusion. However, there is still a very large difference from a dynamic range of human eyes due to a limited dynamic range. Therefore, a part of the image is still overexposed or underexposed, severely affecting a final photographing effect.

For example, for a short-exposure frame, even if the electronic device uses minimum exposure time and a minimum ISO, a bright area of the short-exposure frame is still overexposed.

For example, for a long-exposure frame, even if the electronic device uses maximum exposure time and a highest ISO, a bright area of the long-exposure frame is still underexposed.

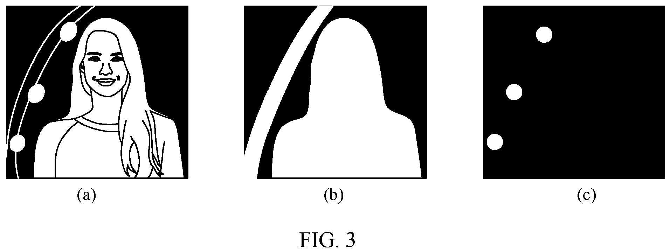

For example, an image shown in (a) in FIG. 3 is a normally exposed image, an image shown in (b) in FIG. 3 is an overexposed image, and an image shown in (c) in FIG. 3 is an underexposed image. Therefore, embodiments of this application provide a photographing method. According to the photographing method, in different scenes, an image may be obtained by adjusting exposure time and an ISO that are used for each frame and an aperture used for each frame. In this way, quality of the taken image is improved.

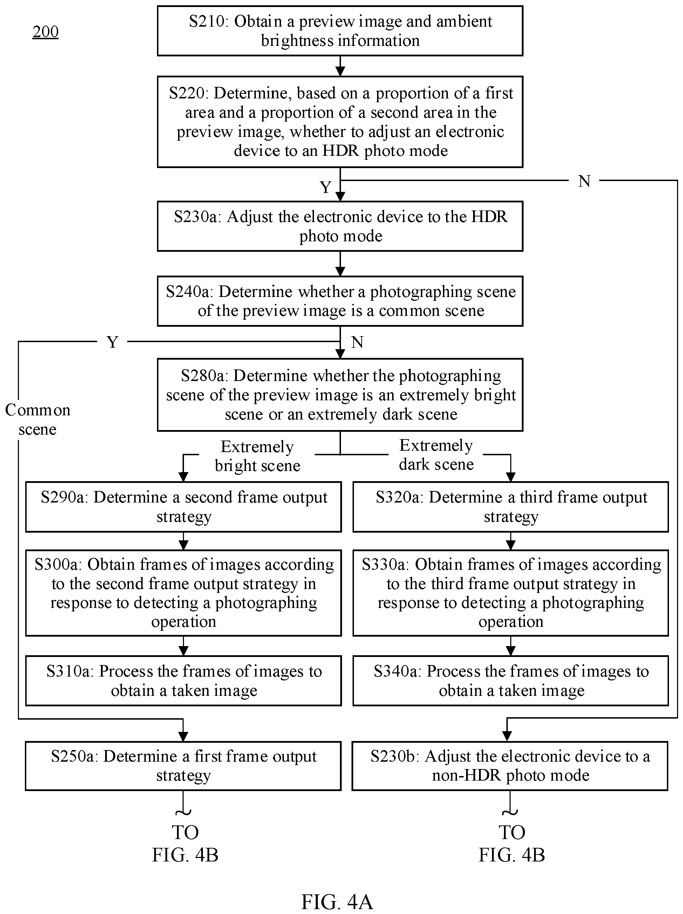

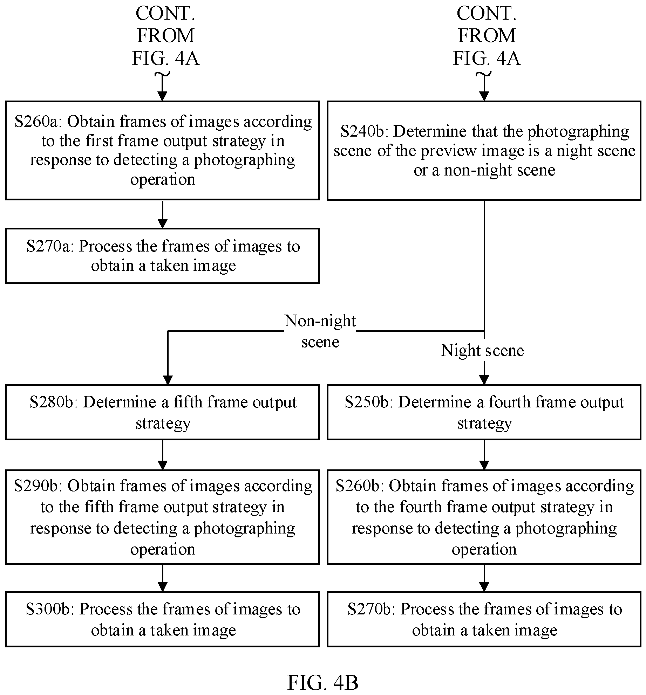

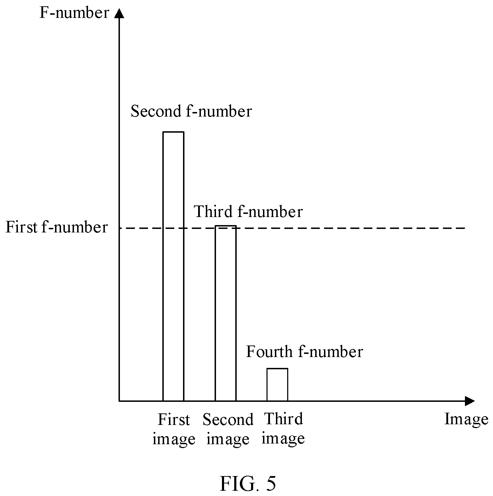

The photographing method may be applied to the electronic device 100 shown in FIG. 1 or FIG. 2. An aperture disposed in the electronic device 100 is a variable aperture. For descriptions of the variable aperture, refer to the foregoing related descriptions. Details are not described herein again. With reference to FIG. 4A and FIG. 4B and FIG. 5, the following describes the photographing method provided in embodiments of this application.

FIG. 4A and FIG. 4B are a schematic flowchart of a photographing method 200 according to an embodiment of this application.

As shown in FIG. 4A and FIG. 4B, the photographing method 200 includes S210, S220, S230a to S340a, and S230b to S300b. It should be understood that the photographing method 200 shown in FIG. 4A and FIG. 4B does not necessarily include each step in S210, S220, S230a to S340a, and S230b to S300b. A relationship between steps S210, S220, S230a to S340a, and S230b to S300b are described in detail below. Details are not described herein.

The following separately describes the steps included in the photographing method 200.

S210: Obtain a preview image and ambient brightness information.

The preview image is an image obtained by using a first ISO, first exposure time, and a first f-number.

The first f-number is a default f-number used when an electronic device enables a photo mode. In other words, the preview image is an image obtained by the electronic device by using the default f-number.

Usually, the first f-number is a middle f-number in a plurality of f-numbers of the electronic device. For example, the first f-number may be F2.

A trigger condition for obtaining the preview image by the electronic device is not limited in this embodiment of this application.

In an example, after detecting an operation of starting a camera application by a user, the electronic device may start a camera of the electronic device to obtain an image in real time, and display, on an interface of the electronic device, the image obtained by the camera in real time, for the user to preview the image. In this case, the image obtained by the camera in real time may be the preview image in S210. A trigger event of performing S210 by the electronic device may be the operation of starting the camera application by the user.

In this example, after the camera application on the electronic device is started, an ISO of the electronic device is adjusted to the first ISO, exposure time of the electronic device is adjusted to the first exposure time, and an f-number of the electronic device is adjusted to the default first f-number, so that the preview image is obtained.

In another example, after the electronic device detects an operation of tapping a photographing control by a user, a camera of the electronic device obtains an image, and display, on an interface of the electronic device, the image obtained by the camera, for the user to preview the image. In this case, the image obtained by the camera may be the preview image in S210. A trigger event of performing S210 by the electronic device may be the operation of tapping the photographing control by the user.

In this example, after the electronic device detects the operation of tapping the photographing control by the user, an ISO of the electronic device is adjusted to the first ISO, exposure time of the electronic device is adjusted to the first exposure time, and an f-number of the electronic device is adjusted to the default first f-number, so that the preview image is obtained.

The ambient brightness information indicates a brightness value of an environment in which the electronic device is currently located.

A manner of obtaining the ambient brightness information is not limited in this embodiment of this application.

For example, an ambient light sensor may be disposed in the electronic device, and the electronic device may obtain the ambient brightness information by using the ambient light sensor.

It should be noted that an execution sequence of obtaining the preview image and obtaining the ambient brightness information in S210 is not limited in this embodiment of this application. S220: Determine, based on a proportion of a first area and a proportion of a second area in the preview image, whether to adjust the electronic device to an HDR photo mode.

The first area includes at least two pixels whose pixel values are greater than a third threshold in the preview image. In this case, the first area may be referred to as a bright area in the preview image.

The second area includes at least two pixels whose pixel values are less than a fourth threshold in the preview image. The fourth threshold is less than the third threshold. The second area herein may be referred to as a dark area in the preview image.

When the proportion of the first area in the preview image is greater than or equal to a first threshold, and the proportion of the second area in the preview image is greater than or equal to a second threshold, in other words, both a proportion of the bright area and a proportion of the dark area in the preview image are large, it may be considered that the preview image has a high dynamic range. In this case, the electronic device may be adjusted to the HDR photo mode, in other words, S230a is performed, so that the electronic device can subsequently obtain an image with a high dynamic range.

When the proportion of the first area in the preview image is less than a first threshold, and/or the proportion of the second area in the preview image is less than a second threshold, in other words, both a proportion of the bright area and/or a proportion of the dark area in the preview image are/is not large, it may be considered that the preview image has a low dynamic range. In this case, the electronic device may be adjusted to a non-HDR photo mode, in other words, S230b is performed, so that the electronic device can subsequently obtain an image with a low dynamic range.

The following continues to describe the photographing method 200 with reference to Case 1 and Case 2 separately. In Case 1, the electronic device is adjusted to the HDR photo mode, and in Case 2, the electronic device is adjusted to the non-HDR photo mode.

Case 1: The electronic device is adjusted to the HDR photo mode.

In Case 1, S240a is performed after S230a.

S240a: Determine whether a photographing scene of the preview image is a common scene.

In an example, S240a may specifically include: obtaining scene information based on the preview image; determining a brightness value of a focus area in the preview image based on the scene information; and when the brightness value of the focus area in the preview image is less than a seventh threshold, determining that the photographing scene of the preview image is the common scene; or when the brightness value of the focus area in the preview image is greater than or equal to a seventh threshold, determining that the photographing scene of the preview image is not the common scene.

For example, the scene information may indicate a depth of field of the preview image. For example, the scene information may indicate that the fourth photographing scene of the preview image is a portrait scene, a blue-sky scene, a landscape scene, a green plant scene, a motion scene, a solid color scene, a food scene, or the like.

For example, when the scene information indicates a portrait scene, the focus area is an area occupied by a human face in the preview image. For another example, when the scene information indicates a blue-sky scene, the focus area is an area occupied by a blue sky in the preview image. For another example, when the scene information indicates a landscape scene, the focus area is an area occupied by a landscape in the preview image. For another example, when the scene information indicates a green plant scene, the focus area is an area occupied by a green plant in the preview image. For another example, when the scene information indicates a motion scene, the focus area is an area occupied by a moving object (for example, an adult, a child, or a pet) in the preview image. For another example, when the scene information indicates a solid color scene, the focus area is an area occupied by a main target (for example, a still portrait) in the preview image. For another example, when the scene information indicates a food scene, the focus area is an area occupied by food in the preview image.

In another example, when a first condition and a second condition are not met, it may be determined that the photographing scene of the preview image is the common scene. Alternatively, when a first condition and/or a second condition are/is met, it may be determined that the photographing scene of the preview image is not the common scene.

The first condition includes: The first ISO is a minimum ISO of the electronic device, the first exposure time is minimum exposure time of the electronic device, and the brightness value of the environment in which the electronic device is currently located is greater than or equal to a fifth threshold.

The second condition includes: The first ISO is a maximum ISO of the electronic device, the first exposure time is maximum exposure time of the electronic device, and the brightness value of the environment in which the electronic device is currently located is less than a sixth threshold.

Optionally, in some embodiments, "the brightness value of the environment in which the electronic device is currently located is greater than or equal to a fifth threshold" included in the first condition may alternatively be replaced with "the proportion of the first area in the preview image is greater than or equal to an eighth threshold". Alternatively, the first condition may further include: The proportion of the first area in the preview image is greater than or equal to an eighth threshold.

Optionally, in some embodiments, "the brightness value of the environment in which the electronic device is currently located is less than a fifth threshold" included in the second condition may alternatively be replaced with "the proportion of the second area in the preview image is less than a ninth threshold". Alternatively, the second condition may further include: The proportion of the second area in the preview image is less than a ninth threshold.

It should be noted that, first, different electronic devices may correspond to different minimum ISOs. For example, a minimum ISO of an electronic device is 50, and a minimum ISO of an electronic device is 80. Certainly, different electronic devices may correspond to a same minimum ISO. This is not limited in this application.

When different electronic devices correspond to different minimum ISOs, conditions for determining, by the different electronic devices, whether a second photographing scene is an extremely bright scene or an extremely dark scene are different.

Second, different cameras may correspond to different minimum ISOs. In this way, when a plurality of cameras are disposed on an electronic device, a minimum ISO of the electronic device is determined based on an ISO corresponding to a camera for obtaining the preview image. Certainly, different cameras may alternatively correspond to a same minimum ISO. This is not limited in this application.

If different cameras correspond to different minimum ISOs, when the electronic device obtains the preview image by using different cameras, conditions for determining, by the electronic device, whether a second photographing scene is an extremely bright scene or an extremely dark scene are also different.

Third, electronic devices correspond to same minimum exposure time. Certainly, the electronic devices may alternatively correspond to different minimum exposure time. This is not limited in this application.

When the first condition and the second condition are not met, that is, a large area in the preview image obtained by the electronic device is not overexposed or underexposed, a photographing effect of the preview image is good. In this case, the electronic device may determine that the photographing scene of the preview image is the common scene. Then, the electronic device may continue to use an exposure parameter of the preview image to obtain an image. In this case, S250a and S260a are performed after S240a. S250a may be performed before S260a, or S250a may be performed in a process of performing S260a. This is not limited in this application.

S250a: Determine a first frame output strategy.

The first frame output strategy includes the first exposure time, the first f-number, and a first frame output quantity M.

S260a: Obtain frames of images according to the first frame output strategy in response to detecting a photographing operation.

Specifically, the electronic device obtains M frames of images by using the first exposure time and the first f-number.

Optionally, S270a may be further performed after S260a.

S270a: Process the frames of images to obtain a taken image.

For example, fusion, noise reduction, and demosaicing processing are performed on the M frames of images obtained in S260a, to obtain the taken image.

When the first condition and the second condition are met, that is, a large area in the preview image obtained by the electronic device is overexposed or underexposed, a photographing effect of the preview image is not good. In this case, the electronic device may determine that the photographing scene of the preview image is not the common scene. Then, to improve a photographing effect of an image, the electronic device does not continue to use an exposure parameter of the preview image, but formulates a respective frame output strategy based on whether the photographing scene of the preview image is the extremely bright scene or the extremely dark scene, and obtains an image according to the respective frame output strategy. In this case, S280a is performed after S240a.

S280a: Determine whether the photographing scene of the preview image is the extremely bright scene or the extremely dark scene.

When the first condition is met, that is, when the first ISO is the minimum ISO of the electronic device, the first exposure time is the minimum exposure time of the electronic device, and the brightness value of the environment in which the electronic device is currently located is greater than or equal to the fifth threshold, it is determined that the photographing scene of the preview image is the extremely bright scene. In other words, in this case, the preview image obtained by the electronic device by using the minimum ISO, the minimum exposure time, and the default first f-number is still overexposed. In this case, the electronic device may determine that the photographing scene of the preview image is the extremely bright scene. In this case, S290a and S300a are performed after S280a. S290a may be performed before S300a, or S290a may be performed in a process of performing S300a. This is not limited in this application.

When the second condition is met, that is, when the first ISO is the maximum ISO of the electronic device, the first exposure time is the maximum exposure time of the electronic device, and the brightness value of the environment in which the electronic device is currently located is less than the sixth threshold, it is determined that the photographing scene of the preview image is the extremely dark scene. In other words, in this case, the preview image obtained by the electronic device by using the maximum ISO, the maximum exposure time, and the default first f-number is still underexposed. In this case, the electronic device may determine that the photographing scene of the preview image is the extremely dark scene. In this case, S320a and S330a are performed after S280a. S320a may be performed before S330a, or S320a may be performed in a process of performing S330a. This is not limited in this application.

The following continues to describe the photographing method 200 with reference to Case A and Case B separately. In Case A, the photographing scene of the preview image is the extremely bright scene, and in Case B, the photographing scene of the preview image is the extremely dark scene. Case A: The photographing scene of the preview image is the extremely bright scene.

S290a: Determine a second frame output strategy.

In an example, the second frame output strategy includes second exposure time corresponding to a first image, a second f-number corresponding to the first image, and a frame output quantity $N_1$ corresponding to the first image; third exposure time corresponding to a second image, a third f-number corresponding to the second image, and a frame output quantity $N_{21}$ corresponding to the second image; and fourth exposure time corresponding to a third image, a fourth f-number corresponding to the third image, and a frame output quantity $N_3$ corresponding to the third image. The second exposure time, the third exposure time, and the fourth exposure time increase sequentially.

For example, the third exposure time is t, the second exposure time is $\dfrac{t}{n1}$, and the fourth exposure time is t × n1. In this case, the first image, the second image, and the third image may be respectively referred to as a short-exposure frame, a normal-exposure frame, and a long-exposure frame.

The second f-number is greater than the first f-number, and the fourth f-number is less than the first f-number.

**In** addition, the third f-number is an f-number corresponding to the brightness value of the focus area in the preview image. **In** other words, the electronic device selects, based on the brightness value of the focus area in the preview image, the f-number used for the second image. This can ensure basic brightness of a target in the second image.

For example, a mapping relationship between a plurality of brightness values and a plurality of f-numbers may be preset. The brightness value is inversely proportional to the f-number. To be specific, a larger brightness value indicates a smaller f-number, and a smaller brightness value indicates a larger f-number. **In** this way, the electronic device selects, as the third f-number based on the mapping relationship, the f-number corresponding to the brightness value of the focus area in the preview image.

For example, the scene information may be obtained based on the preview image, and the brightness value of the focus area in the preview image is determined based on the scene information. For descriptions of the scene information, refer to the foregoing related descriptions. Details are not described herein again.

FIG. 5 lists f-numbers used for the first image, the second image, and the third image. In addition, in FIG. 5, an example in which the third f-number is slightly greater than the first f-number is used, and shall not constitute a limitation on this application.

For example, the first f-number may be F2, the second f-number may be F4, the third f-number may be F2.8 or F4, and the fourth f-number may be F1.4.

In the first frame output strategy, the second f-number used for the first image is set to be greater than the first f-number, to reduce an amount of admitted light. This can avoid a problem that the first image subsequently output by the electronic device is still overexposed.

Optionally, in some embodiments, the second f-number may be set to be greater than the first f-number, or may be set to a maximum f-number of the electronic device. This can further avoid the problem that the first image subsequently output by the electronic device is still overexposed, and can enrich details of a bright area in the first image.

In the first frame output strategy, the fourth f-number used for the third image is set to be less than the first f-number, to increase an amount of admitted light. This can avoid a problem that the third image subsequently output by the electronic device is still underexposed.

Optionally, in some embodiments, the fourth f-number may be set to be less than the first f-number, or may be set to be a minimum f-number of the electronic device. In this way, an amount of admitted light on the electronic device can reach the maximum when the third image is obtained. This can further avoid the problem that the third image subsequently output by the electronic device is still underexposed, and can enrich details of a dark area in the third image.

For example, the frame output quantity $N_1$ corresponding to the first image and the frame output quantity $N_{21}$ corresponding to the second image each may be an integer greater than or equal to 2. Optionally, in some embodiments, because the fourth exposure time of the third image is long, a value of the frame output quantity $N_3$

of the third image may be determined based on status information of the electronic device.

Specifically, when the status information indicates that a photographing status of the electronic device is stable, the frame output quantity $N_3$ of the third image is an integer greater than or equal to 2; or when the status information indicates that a photographing status of the electronic device is unstable, the frame output quantity $N_3$ of the third image is a positive integer less than or equal to 2. In this way, when the photographing status of the electronic device is stable, the frame output quantity $N_3$ of the third image may be as large as possible, for example, at least two frames. This can enrich the details of the dark area in the third image, and can reduce noise of the third image. However, when the photographing status of the electronic device is unstable, the frame output quantity $N_3$ of the third image may be as small as possible, for example, a maximum of two frames. This ensures image quality of the third image.

A manner in which the electronic device obtains the status information of the electronic device is not limited in this embodiment of this application.

In an example, the electronic device may obtain the status information of the electronic device based on whether a current photographing status is a handheld state or a tripod state. Specifically, if the current photographing status of the electronic device is the handheld state, it may be considered that the status information of the electronic device indicates that the photographing status of the electronic device is unstable. Alternatively, if the current photographing status of the electronic device is the tripod state, it may be considered that the status information of the electronic device indicates that the photographing status of the electronic device is stable.

In another example, the electronic device may alternatively obtain the status information of the electronic device by using an acceleration sensor in the electronic device. Specifically, if an average value (or a maximum value) of a plurality of pieces of data collected by the acceleration sensor is greater than or equal to a threshold 3, it may be considered that a jitter degree of the electronic device is large, in other words, it may be considered that the status information of the electronic device indicates that the photographing status of the electronic device is unstable. Alternatively, if an average value (or a maximum value) of a plurality of pieces of data collected by the acceleration sensor is less than a threshold 3, it may be considered that a jitter degree of the electronic device is small, in other words, it may be considered that the status information of the electronic device indicates that the photographing status of the electronic device is stable.

In another example, in addition to the exposure time, the f-number, and the frame output quantity that correspond to each of the first image, the second image, and the third image, the second frame output strategy may further include sixth exposure time corresponding to a fifth image, a sixth f-number corresponding to the fifth image, and a frame output quantity $N_5$ corresponding to the fifth image.

The sixth exposure time is less than the second exposure time. For example, the sixth exposure time is

$$\frac{t}{n2}$$

(n2 is greater than n1). In this case, the fifth image may be referred to as an ultrashort-exposure frame.

The sixth f-number is greater than the second f-number. In this way, an amount of admitted light on the electronic device can be reduced when the fifth image is obtained. This can avoid a problem that the obtained fifth image is overexposed, and can extend a depth of field.

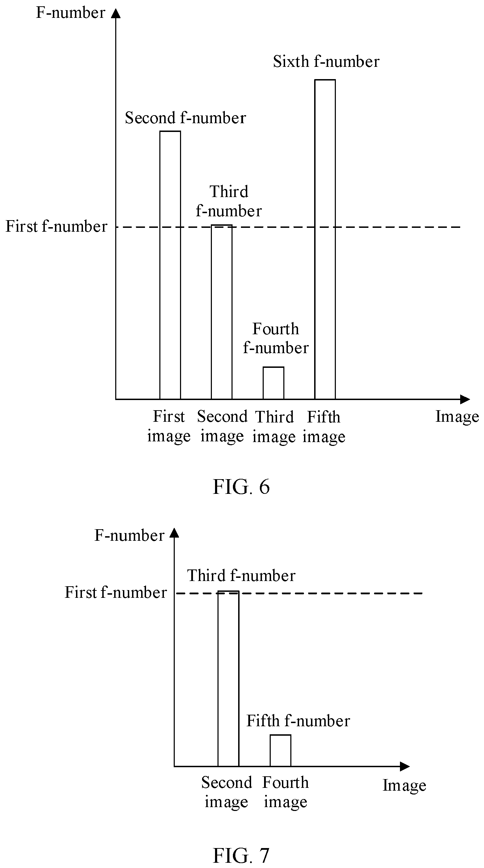

FIG. 6 lists f-numbers used for the first image, the second image, the third image, and the fifth image. In addition, in FIG. 6, an example in which the third f-number is slightly greater than the first f-number is used, and shall not constitute a limitation on this application.

For example, the first f-number may be F2, the second f-number may be F2.8, the sixth f-number may be F4, the third f-number may be F2.8 or F4, and the fourth f-number may be F1.4.

For example, the frame output quantity $N_5$ corresponding to the fifth image may be an integer greater than or equal to 2. This can enrich details of a bright area in the fifth image, and can reduce noise of the fifth image. Further, definition of a taken image is improved.

It should be noted that, in the foregoing examples of the second frame output strategy, an example in which an image with one f-number is output at same exposure time is used for description, and shall not constitute a limitation on this application.

For example, in some embodiments, the second frame output strategy may further include the fourth exposure time corresponding to a sixth image, a seventh f-number corresponding to the sixth image, and a frame output quantity $N_6$ corresponding to the sixth image. In other words, two types of images with different f-numbers may be output at the fourth exposure time. The seventh f-number is greater than the fourth f-number. In this way, the third image and the sixth image that have different f-numbers are output at the same exposure time, overall brightness of the output third image with a small f-number (the fourth f-number) is better, and a depth of field of the output sixth image with a large f-number (the seventh f-number) is larger. Therefore, an image subsequently obtained by fusing the output third image with the small f-number (the fourth f-number) and the sixth image with the large f-number (the seventh f-number) has rich details in a dark area, has an extended depth of field, and has low noise. Further, definition of a taken image can be improved.

A value of the seventh f-number and a value of the first f-number are not limited in embodiments of this application.

Optionally, in some embodiments, a value of the frame output quantity $N_6$ of the sixth image may be determined based on the status information of the electronic device.

Specifically, when the status information indicates that a photographing status of the electronic device is stable, the frame output quantity $N_6$ of the sixth image is an integer greater than or equal to 2; or when the status information indicates that a photographing status of the electronic device is unstable, the frame output quantity $N_6$ of the sixth image is a positive integer less than or equal to 2. In this way, when the photographing status of the electronic device is stable, the frame output quantity $N_6$ of the sixth image with the seventh f-number may be as large as possible, for example, at least two frames. This can enrich details of a dark area in the sixth image, and can reduce noise of the sixth image. However, when the photographing status of the electronic device is unstable, the frame output quantity $N_6$ of the sixth image with the seventh f-number may be as small as possible, for example, a maximum of two frames. This ensures image quality of the sixth image. S300a: Obtain frames of images according to the second frame output strategy in response to detecting a photographing operation.

In an example, if the second frame output strategy includes the exposure time, the f-number, and the frame output quantity that correspond to each of the first image, the second image, and the third image, the obtaining frames of images specifically includes: adjusting exposure time to the second exposure time, and adjusting an f-number of a camera for obtaining the first image to the second f-number, to obtain $N_1$ frames of first images; adjusting exposure time to the third exposure time, and adjusting an f-number of a camera for obtaining the second image to the third f-number, to obtain $N_{21}$ frames of second images; and adjusting exposure time to the fourth exposure time, and adjusting an f-number of a camera for obtaining the third image to the fourth f-number, to obtain $N_3$ frames of third images.

In another example, if the second frame output strategy further includes the sixth exposure time corresponding to the fifth image, the sixth f-number corresponding to the fifth image, and the frame output quantity corresponding to the fifth image in addition to the exposure time, the f-number, and the frame output quantity that correspond to each of the first image, the second image, and the third image, the obtaining frames of images specifically includes: adjusting exposure time to the second exposure time, and adjusting an f-number of a camera for obtaining the first image to the second f-number, to obtain $N_1$ frames of first images; adjusting exposure time to the third exposure time, and adjusting an f-number of a camera for obtaining the second image to the third f-number, to obtain $N_{21}$ frames of second images; adjusting exposure time to the fourth exposure time, and adjusting an f-number of a camera for obtaining the third image to the fourth f-number, to obtain $N_3$ frames of third images; and adjusting exposure time to the sixth exposure time, and adjusting an f-number of a camera for obtaining the fifth image to the fourth f-number, to obtain $N_5$ frames of fifth images.

Cameras for obtaining the first image, the second image, the third image, and the fifth image may be the same or may be different. This is not limited in this application.

There may be one or more cameras for obtaining the first image, the second image, the third image, or the fifth image. This is not limited in this application.

When there are a plurality of cameras for obtaining the first image, the electronic device may adjust some or all of the plurality of cameras for obtaining the first image, to adjust each of f-numbers of the cameras for obtaining the first image to the second f-number. Similarly, when there are a plurality of cameras for obtaining the second image, the electronic device may alternatively adjust some or all of the plurality of cameras for obtaining the second image, to adjust each of f-numbers of the cameras for obtaining the second image to the third f-number. When there are a plurality of cameras for obtaining the third image, the electronic device may adjust some or all of the plurality of cameras for obtaining the third image, to adjust each of f-numbers of the cameras for obtaining the third image to the fourth f-number. When there are a plurality of cameras for obtaining the fifth image, the electronic device may adjust some or all of the plurality of cameras for obtaining the fifth image, to adjust each of f-numbers of the cameras for obtaining the fifth image to the sixth f-number.

A sequence of obtaining the frames of images in S300a is not limited in embodiments of this application.

Optionally, S310a may be further performed after S300a.

S310a: Process the obtained frames of images to obtain a taken image.

In an example, if the images obtained in S300a include the $N_1$ frames of first images, the $N_{21}$ frames of second images, and the $N_3$ frames of third images, the electronic device may first perform fusion, noise reduction, and demosaicing processing on the $N_{21}$ frames of second images to obtain a reference frame; fuse the $N_1$ frames of first images and the $N_3$ frames of third images to obtain a fusion frame; and fuse the reference frame and the fusion frame to obtain a taken image. In another example, if the images obtained in S300a include the $N_1$ frames of first images, the $N_{21}$ frames of second images, the $N_3$ frames of third images, and the $N_5$ frames of fifth images, the electronic device may first perform fusion, noise reduction, and demosaicing processing on the $N_{21}$ frames of second images to obtain a reference frame; fuse the $N_1$ frames of first images, the $N_3$ frames of third images, and the $N_5$ frames of fifth images to obtain a fusion frame; and fuse the reference frame and the fusion frame to obtain a taken image.

Case B: The photographing scene of the preview image is the extremely dark scene.

S320a: Determine a third frame output strategy.

In an example, the third frame output strategy includes third exposure time corresponding to a second image, a third f-number corresponding to the second image, and a frame output quantity $N_{22}$ corresponding to the second image; and fifth exposure time corresponding to a fourth image, a fifth f-number corresponding to the fourth image, and a frame output quantity $N_4$ corresponding to the fourth image.

The fifth exposure time is greater than the third exposure time.

Optionally, in some embodiments, the fifth exposure time is greater than the third exposure time and a fourth exposure time. For example, the third exposure time is t, and the fifth exposure time is $t \times n3$ (n3 is greater than n1). In this case, the second image and the fourth image may be respectively referred to as a normal-exposure frame and an ultra-long-exposure frame.

The fifth f-number is less than the first f-number. For a value of the third f-number, refer to the foregoing descriptions. Details are not described herein again.

FIG. 7 lists f-numbers used for the second image and the fourth image. In addition, in FIG. 7, an example in which the third f-number is slightly greater than the first f-number is used, and shall not constitute a limitation on this application.

For example, the first f-number may be F2, the third f-number may be F2.8 or F4, and the fifth f-number may be F1.4.

In the third frame output strategy, the fifth f-number used for the fourth image is set to be less than the first f-number, to increase an amount of admitted light. This can avoid a problem that the fourth image subsequently output by the electronic device is still underexposed.

Optionally, in some embodiments, the fifth f-number may be set to be less than the first f-number, or may be set to be a minimum f-number of the electronic device. In this way, an amount of admitted light on the electronic device can reach the maximum when the fourth image is obtained.

This can further avoid the problem that the fourth image subsequently output by the electronic device is underexposed, and can enrich details of a dark area in the fourth image.

For example, the frame output quantity $N_{22}$ corresponding to the second image may be an integer greater than or equal to 2.

Optionally, in some embodiments, because the exposure time of the fourth image is long, a value of the frame output quantity $N_4$ of the fourth image may be determined based on status information of the electronic device.

Specifically, when the status information indicates that a photographing status of the electronic device is stable, the frame output quantity $N_4$ of the fourth image is an integer greater than or equal to 2; or when the status information indicates that a photographing status of the electronic device is unstable, the frame output quantity $N_4$ of the fourth image is 1. In this way, when the photographing status of the electronic device is stable, the frame output quantity $N_4$ of the fourth image may be as large as possible, for example, at least two frames. This can enrich the details of the dark area in the fourth image, and can reduce noise of the fourth image. However, when the photographing status of the electronic device is unstable, the frame output quantity $N_4$ of the fourth image may be as small as possible, for example, a maximum of one frame. This ensures image quality of the fourth image.

It should be noted that, in the foregoing examples of the third frame output strategy, an example in which an image with one f-number is output at same exposure time is used for description, and shall not constitute a limitation on this application.

For example, in some embodiments, the third frame output strategy may further include the fifth exposure time corresponding to a seventh image, an eighth f-number corresponding to the seventh image, and a frame output quantity $N_7$ corresponding to the seventh image. In other words, two types of images with different f-numbers may be output at the fifth exposure time. The eighth f-number is greater than the fifth f-number. In this way, the fourth image and the seventh image that have different f-numbers are output at the same exposure time, overall brightness of the output fourth image with a small f-number (the fifth f-number) is better, and a depth of field of the output seventh image with a large f-number (the eighth f-number) is larger. Therefore, an image subsequently obtained by fusing the output fourth image with the small f-number (the fifth f-number) and the seventh image with the large f-number (the eighth f-number) has rich details in a dark area, has an extended depth of field, and has low noise. Further, definition of a taken image can be improved.

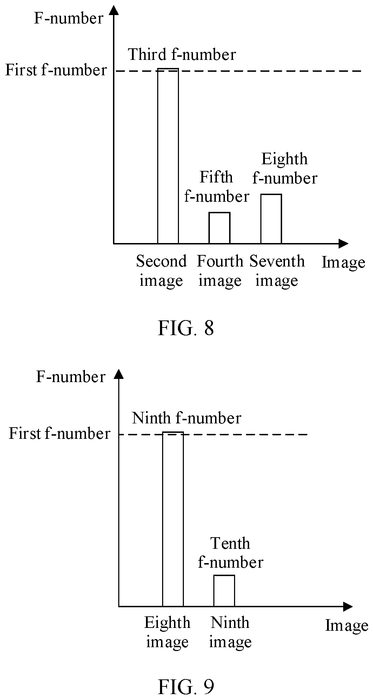

FIG. 8 lists f-numbers used for the second image, the fourth image, and the seventh image. In addition, in FIG. 8, an example in which the third f-number is slightly greater than the first f-number is used, and shall not constitute a limitation on this application.

It should be noted that a value of the eighth f-number and a value of the first f-number are not limited in embodiments of this application.

Optionally, in some embodiments, a value of the frame output quantity $N_7$ of the seventh image may be determined based on the status information of the electronic device.

Specifically, when the status information indicates that a photographing status of the electronic device is stable, the frame output quantity $N_7$ of the seventh image is an integer greater than or equal to 2; or when the status information indicates that a photographing status of the electronic device is unstable, the frame output quantity $N_7$ of the seventh image is 1. In this way, when the photographing status of the electronic device is stable, the frame output quantity $N_7$ of the seventh image may be as large as possible, for example, at least two frames. This can enrich details of a dark area in the seventh image, and can reduce noise of the seventh image. However, when the photographing status of the electronic device is unstable, the frame output quantity $N_7$ of the seventh image may be as small as possible, for example, a maximum of one frame. This ensures image quality of the seventh image.

S330a: Obtain frames of images according to the third frame output strategy in response to detecting a photographing operation.

In an example, if the third frame output strategy includes the exposure time, the f-number, and the frame output quantity that correspond to each of the second image and the fourth image, the obtaining frames of images specifically includes: adjusting exposure time to the third exposure time, and adjusting an f-number of a camera for obtaining the second image to the third f-number, to obtain $N_{22}$ frames of second images; and adjusting exposure time to the fifth exposure time, and adjusting an f-number of a camera for obtaining the fourth image to the fifth f-number, to obtain $N_5$ frames of fourth images.

Cameras used by the electronic device to obtain the second image and the fourth image may be the same or may be different. This is not limited in this application.

There may be one or more cameras used by the electronic device to obtain the second image or the fourth image. This is not limited in this application.

When there are a plurality of cameras for obtaining the second image, the electronic device may alternatively adjust some or all of the plurality of cameras for obtaining the second image, to adjust each of f-numbers of the cameras for obtaining the second image to the third f-number. Similarly, when there are a plurality of cameras for obtaining the fourth image, the electronic device may adjust some or all of the plurality of cameras for obtaining the fourth image, to adjust each of f-numbers of the cameras for obtaining the fourth image to the fifth f-number.

**In** another example, if the third frame output strategy further includes the fifth exposure time corresponding to the seventh image, the eighth f-number corresponding to the seventh image, and the frame output quantity corresponding to the seventh image in addition to the exposure time, the f-number, and the frame output quantity that correspond to each of the second image and the fourth image, the obtaining frames of images specifically includes:

adjusting exposure time to the third exposure time, and adjusting an f-number of a camera for obtaining the second image to the third f-number, to obtain $N_{22}$ frames of second images; adjusting exposure time to the fifth exposure time, and adjusting an f-number of a camera for obtaining the fourth image to the fifth f-number, to obtain $N_5$ frames of fourth images; and adjusting exposure time to the fifth exposure time, and adjusting an f-number of a camera for obtaining the seventh image to the eighth f-number, to obtain $N_7$ frames of seventh images. Cameras for obtaining the second image, the fourth image, and the seventh image may be the same or may be different. This is not limited in this application.

There may be one or more cameras for obtaining the seventh image. This is not limited in this application.

When there are a plurality of cameras for obtaining the seventh image, the electronic device may alternatively adjust some or all of the plurality of cameras for obtaining the seventh image, to adjust each of f-numbers of the cameras for obtaining the seventh image to the eighth f-number. A sequence of obtaining the frames of images in S330a is not limited in embodiments of this application.

In addition, in an example, regardless of S300a or S330a, if f-numbers used for two adjacent frames are different, when the electronic device outputs a next frame in the two adjacent frames, an f-number of a previous frame in the two adjacent frames may be directly adjusted to an f-number of the next frame.

In another example, regardless of S300a or S330, if f-numbers used for two adjacent frames are different, the electronic device may first adjust an f-number of a previous frame to an adjacent value of the f-number of the previous frame in a direction of an f-number of a next frame, and then adjust the adjacent value to an adjacent value of the adjacent value of the f-number of the previous frame in the direction of the f-number of the next frame, until the electronic device adjusts an f-number to the f-number of the next frame.

Optionally, S340a may be further performed after S330a.

S340a: Process the obtained frames of images to obtain a taken image.

In an example, if the images obtained in S330a include the $N_{22}$ frames of second images and the $N_4$ frames of fourth images, the electronic device may first perform fusion, noise reduction, and demosaicing processing on the $N_{22}$ frames of second images to obtain a reference frame; and fuse the reference frame and the $N_4$ frames of fourth images to obtain the taken image.

In another example, if the images obtained in S330a include the $N_{22}$ frames of second images, the $N_4$ frames of fourth images, and the $N_7$ frames of seventh images, the electronic device may first perform fusion, noise reduction, and demosaicing processing on the $N_{22}$ frames of second images to obtain a reference frame; fuse the $N_4$ frames of fourth images and the $N_7$ frames of seventh images to obtain a fusion frame; and fuse the reference frame and the fusion frame to obtain the taken image.

Case 2: The electronic device is adjusted to the non-HDR photo mode.

In Case 2, S240b is performed after S230b.

S240b: Determine that the photographing scene of the preview image is a night scene or a non-night scene.

When the brightness value of the environment in which the electronic device is currently located is less than or equal to a fifth threshold, it is determined that the photographing scene of the preview image is the night scene. In this case, S250b and S260b are performed after S240b. S250b may be performed before S260b, or S250b may be performed in a process of performing S260b. This is not limited in this application.

When the brightness value of the environment in which the electronic device is currently located is greater than a fifth threshold, it is determined that the photographing scene of the preview image is the non-night scene. In this case, S280b and S290b are performed after S240b. S280b may be performed before S290b, or S280b may be performed in a process of performing S290b. This is not limited in this application.

Optionally, the non-night scene described above may also be referred to as a common scene/a daytime scene/a normal scene/a high-brightness scene/a medium-brightness scene/a low-brightness scene.

The following continues to describe the photographing method 200 with reference to Case C and Case D separately. In Case C, the photographing scene of the preview image is the night scene, and in Case D, the photographing scene of the preview image is the non-night scene.

Case C: The photographing scene of the preview image is the night scene.

S250b: Determine a fourth frame output strategy.

**In** an example, the fourth frame output strategy includes third exposure time corresponding to an eighth image, a ninth f-number corresponding to the eighth image, and a frame output quantity $N_{81}$ corresponding to the eighth image; and fourth exposure time corresponding to a ninth image, a tenth f-number corresponding to the ninth image, and a frame output quantity $N_9$ corresponding to the ninth image.

For descriptions of the fourth exposure time and the third exposure time, refer to the foregoing related descriptions. Details are not described herein again.

The tenth f-number is less than the first f-number. In addition, the ninth f-number is an f-number corresponding to a brightness value of a focus area in the preview image. In other words, the electronic device selects, based on the brightness value of the focus area in the preview image, the f-number used for the eighth image. This can ensure basic brightness of a target in the eighth image. FIG. 9 lists f-numbers used for the eighth image and the ninth image. In addition, in FIG. 9, an example in which the ninth f-number is slightly greater than the first f-number is used, and shall not constitute a limitation on this application.

For example, an f-number corresponding to the first f-number may be F2, an f-number corresponding to the ninth f-number may be F2.8 or F4, and an f-number corresponding to the tenth f-number may be F1.4.

In the fourth frame output strategy, the tenth f-number used for the ninth image is set to be less than the first f-number, to increase an amount of admitted light. This can avoid a problem that the ninth image subsequently output by the electronic device is still underexposed.

Optionally, in some embodiments, the tenth f-number may be set to be less than the first f-number, or may be set to a minimum f-number of the electronic device. This can further avoid the problem that the obtained ninth image is underexposed, and can enrich details of a dark area in the ninth image.

For example, the frame output quantity $N_{81}$ corresponding to the eighth image may be an integer greater than or equal to 2.

Optionally, in some embodiments, because the exposure time of the ninth image is long, the frame output quantity $N_9$ of the ninth image may be determined based on status information of the electronic device.

Specifically, when the status information indicates that a photographing status of the electronic device is stable, the frame output quantity $N_9$ of the ninth image is an integer greater than or equal to 2; or when the status information indicates that a photographing status of the electronic device is unstable, the frame output quantity $N_9$ of the ninth image is a positive integer less than or equal to 2. In this way, when the photographing status of the electronic device is stable, the frame output quantity $N_9$ of the ninth image may be as large as possible, for example, at least two frames. This can enrich the details of the dark area in the ninth image, and can reduce noise of the ninth image. However, when the photographing status of the electronic device is unstable, the frame output quantity $N_9$ of the ninth image may be as small as possible, for example, a maximum of two frames. This ensures image quality of the ninth image.

It should be noted that, in the foregoing examples of the fourth frame output strategy, an example in which an image with one f-number is output at same exposure time is used for description, and shall not constitute a limitation on this application.

For example, in some embodiments, the fourth frame output strategy may further include the fourth exposure time corresponding to a tenth image, an eleventh f-number corresponding to the tenth image, and a frame output quantity $N_{10}$ corresponding to the tenth image. In other words, two types of images with different f-numbers may be output at the fourth exposure time. The eleventh f-number is greater than the tenth f-number. In this way, the ninth image and the tenth image that have different f-numbers are output at the same exposure time, overall brightness of the output ninth image with a small f-number (the tenth f-number) is better, and a depth of field of the output tenth image with a large f-number (the eleventh f-number) is larger. Therefore, an image subsequently obtained by fusing the output ninth image with the small f-number (the tenth f-number) and the tenth image with the large f-number (the eleventh f-number) has rich details in a dark area, has an extended depth of field, and has low noise. Further, definition of a taken image can be improved.

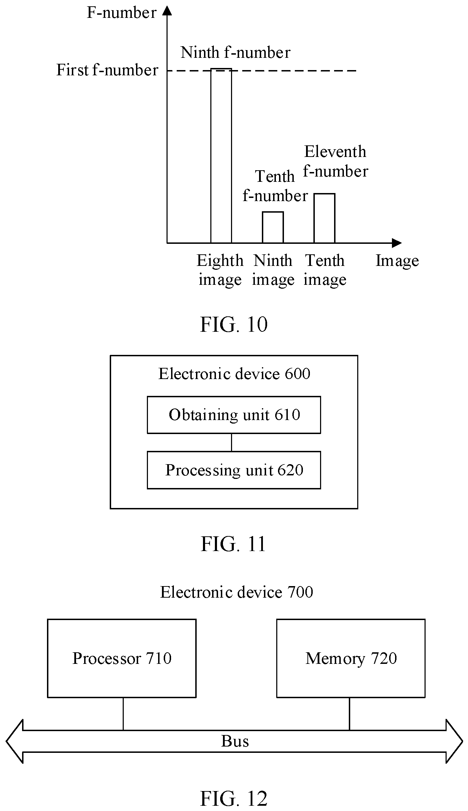

FIG. 10 lists f-numbers used for the eighth image, the ninth image, and the tenth image. In addition, in FIG. 10, an example in which the ninth f-number is slightly greater than the first f-number is used, and shall not constitute a limitation on this application.

It should be noted that a value of the eleventh f-number and a value of the first f-number are not limited in embodiments of this application.

Optionally, in some embodiments, a value of the frame output quantity $N_{10}$ of the tenth image may be determined based on the status information of the electronic device.

Specifically, when the status information indicates that a photographing status of the electronic device is stable, the frame output quantity $N_{10}$ of the tenth image is an integer greater than or equal to 2; or when the status information indicates that a photographing status of the electronic device is unstable, the frame output quantity $N_{10}$ of the tenth image is a positive integer less than or equal to 2. In this way, when the photographing status of the electronic device is stable, the frame output quantity $N_{10}$ of the tenth image may be as large as possible, for example, at least two frames. This can enrich details of a dark area in the tenth image, and can reduce noise of the tenth image. However, when the photographing status of the electronic device is unstable, the frame output quantity $N_{10}$ of the tenth image may be as small as possible, for example, a maximum of two frames. This ensures image quality of the tenth image.

S260b: Obtain frames of images according to the fourth frame output strategy in response to detecting a photographing operation.

In an example, if the fourth frame output strategy includes the exposure time, the f-number, and the frame output quantity that correspond to each of the eighth image and the ninth image, the obtaining frames of images specifically includes: adjusting exposure time to the third exposure time, and adjusting an f-number of a camera for obtaining the eighth image to the ninth f-number, to obtain $N_{81}$ frames of eighth images; and adjusting exposure time to the fourth exposure time, and adjusting an f-number of a camera for obtaining the ninth image to the tenth f-number, to obtain $N_9$ frames of ninth images.

Cameras for obtaining the eighth image and the ninth image may be the same or may be different. This is not limited in this application.

There may be one or more cameras for obtaining the eighth image or the ninth image. This is not limited in this application.

When there are a plurality of cameras for obtaining the eighth image, the electronic device may alternatively adjust some or all of the plurality of cameras for obtaining the eighth image, to adjust each of f-numbers of the cameras for obtaining the eighth image to the ninth f-number.

When there are a plurality of cameras for obtaining the ninth image, the electronic device may alternatively adjust some or all of the plurality of cameras for obtaining the ninth image, to adjust each of f-numbers of the cameras for obtaining the ninth image to the tenth f-number.

In another example, if the fourth frame output strategy further includes the fourth exposure time corresponding to the tenth image, the eleventh f-number corresponding to the tenth image, and the frame output quantity corresponding to the tenth image in addition to the exposure time, the f-number, and the frame output quantity that correspond to each of the eighth image and the ninth image, the obtaining frames of images specifically includes: adjusting exposure time to the third exposure time, and adjusting an f-number of a camera for obtaining the eighth image to the ninth f-number, to obtain $N_{81}$ frames of eighth images; adjusting exposure time to the fourth exposure time, and adjusting an f-number of a camera for obtaining the ninth image to the tenth f-number, to obtain $N_9$ frames of ninth images; and adjusting exposure time to the fourth exposure time, and adjusting an f-number of a camera for obtaining the tenth image to the eleventh f-number, to obtain $N_{10}$ frames of tenth images.

Cameras for obtaining the eighth image, the ninth image, and the tenth image may be the same or may be different. This is not limited in this application.

There may be one or more cameras for obtaining the tenth image. This is not limited in this application.

When there are a plurality of cameras for obtaining the tenth image, the electronic device may alternatively adjust some or all of the plurality of cameras for obtaining the tenth image, to adjust each of f-numbers of the cameras for obtaining the tenth image to the eleventh f-number.

A sequence of obtaining the frames of images in S260b is not limited in embodiments of this application.

Optionally, S270b may be further performed after S260b.

S270b: Process the obtained frames of images to obtain a taken image.

In an example, if the images obtained in S270b include the $N_{81}$ frames of eighth images and the $N_9$ frames of ninth images, the electronic device may first perform fusion, noise reduction, and demosaicing processing on the $N_{81}$ frames of eighth images to obtain a reference frame; and fuse the reference frame and the $N_9$ frames of ninth images to obtain the taken image.

In another example, if the images obtained in S270b include the $N_{81}$ frames of eighth images, the $N_9$ frames of ninth images, and the $N_{10}$ frames of tenth images, the electronic device may first perform fusion, noise reduction, and demosaicing processing on the $N_{81}$ frames of eighth images to obtain a reference frame; fuse the $N_9$ frames of ninth images and the $N_{10}$ frames of tenth images to obtain a fusion frame; and fuse the reference frame and the fusion frame to obtain the taken image.

Case D: The photographing scene of the preview image is the non-night scene.

S280b: Determine a fifth frame output strategy.

In an example, the fifth frame output strategy includes third exposure time corresponding to an eighth image, a ninth f-number corresponding to the eighth image, and a frame output quantity $N_{82}$ corresponding to the eighth image.

For example, the frame output quantity $N_{82}$ corresponding to the eighth image may be an integer greater than or equal to 2.

For descriptions of the third exposure time and the ninth f-number, refer to the foregoing descriptions. Details are not described herein again.

S290b: Obtain frames of images according to the fifth frame output strategy in response to detecting a photographing operation.

Specifically, an f-number of a camera for obtaining the eighth image is adjusted to the ninth f-number, to obtain $N_{82}$ frames of eighth images.

There may be one or more cameras for obtaining the eighth image. This is not limited in this application.

When there are a plurality of cameras for obtaining the eighth image, the electronic device may alternatively adjust some or all of the plurality of cameras for obtaining the eighth image, to adjust each of f-numbers of the cameras for obtaining the eighth image to the ninth f-number.

A sequence of obtaining the frames of images in S290b is not limited in embodiments of this application.

Optionally, S300b may be further performed after S290b.

S300b: Process the obtained frames of images to obtain a taken image.

For example, noise reduction and demosaicing processing may be performed on the $N_{82}$ frames of eighth images, to obtain the taken image.

Optionally, in some embodiments, the second frame output strategy to the fifth frame output strategy that are described above may further include another exposure parameter of each image in addition to the exposure time, the f-number, and the frame output quantity that correspond to the image. The another exposure parameter may be determined based on a raw (raw) preview image. For example, the another exposure parameter may include an ISO. An overexposure ratio and an underexposure ratio in the raw preview image are calculated based on the raw preview image, to further appropriately adjust the ISO.

It should be noted that, in the second frame output strategy to the fifth frame output strategy that are described above, a quantity of f-numbers of images output at same exposure time may be determined by the electronic device, or may be set by the user. This is not limited in this application. For example, the electronic device may determine, based on the status information described above, the quantity of f-numbers of images output at the same exposure time. Specifically, when the status information indicates that the photographing status of the electronic device is stable, images with a plurality of f-numbers may be output at the same exposure time. Alternatively, when the status information indicates that the photographing status of the electronic device is unstable, an image with one f-number may be output at the same exposure time.

With reference to FIG. 11 and FIG. 12, the following describes the electronic device provided in embodiments of this application.

FIG. 11 is a diagram of an example structure of an electronic device 600 according to an embodiment of this application.

As shown in FIG. 11, the electronic device 600 is provided with a variable aperture, and a default f-number used when the electronic device 600 enables a photo mode is a first f-number. The electronic device 600 includes an obtaining unit 610 and a processing unit 620.

In a possible implementation, the obtaining unit 610 is configured to obtain a preview image and ambient brightness information, where the preview image is an image obtained by using a first ISO, first exposure time, and the first f-number, and the ambient brightness information indicates a brightness value of an environment in which the electronic device is currently located. The processing unit 620 is configured to: when a proportion of a first area in the preview image is greater than or equal to a first threshold, and a proportion of a second area in the preview image is greater than or equal to a second threshold, adjust the electronic device to a high dynamic range HDR photo mode, where the first area includes at least two pixels whose pixel values are greater than a third threshold in the preview image, the second area includes at least two pixels whose pixel values are less than a fourth threshold in the preview image, and the fourth threshold is less than the third threshold; and in response to detecting a photographing operation, when the first ISO is a minimum ISO of the electronic device, the first exposure time is minimum exposure time of the electronic device, and the brightness value of the environment in which the electronic device is currently located is greater than or equal to a fifth threshold, obtain $N_1$ frames of first images, $N_{21}$ frames of second images, and $N_3$ frames of third images, and obtain a taken image based on the $N_1$ frames of first images, the $N_{21}$ frames of second images, and the $N_3$ frames of third images; or in response to detecting a photographing operation, when the first ISO is a maximum ISO of the electronic device, the first exposure time is maximum exposure time of the electronic device, and the brightness value of the environment in which the electronic device is currently located is less than a sixth threshold, obtain $N_{22}$ frames of second images and $N_4$ frames of fourth images, and obtain a taken image based on the $N_{22}$ frames of second images and the $N_4$ frames of fourth images.

The first image is an image obtained by using a second f-number and second exposure time, and the second f-number is greater than the first f-number; the second image is an image obtained by using a third f-number and third exposure time, the third exposure time is greater than the second exposure time, and the third f-number is different from the second f-number, a fourth f-number, and a fifth f-number; the third image is an image obtained by using the fourth f-number and fourth exposure time, the fourth f-number is less than the first f-number, and the fourth exposure time is greater than the third exposure time; and the fourth image is an image obtained by using the fifth f-number and fifth exposure time, the fifth f-number is less than the first f-number, and the fifth exposure time is greater than the third exposure time.

In another possible implementation, the obtaining unit 610 is configured to obtain a preview image and ambient brightness information, where the preview image is an image obtained by using the first f-number, and the ambient brightness information indicates a brightness value of an environment in which the electronic device is currently located. The processing unit 620 is configured to: when a proportion of a first area in the preview image is less than a first threshold, and/or a proportion of a second area in the preview image is less than a second threshold, adjust the electronic device to a non-high dynamic range HDR photo mode, where the first area includes at least two pixels whose pixel values are greater than a third threshold in the preview image, the second area includes at least two pixels whose pixel values are less than a fourth threshold in the preview image, and the fourth threshold is less than the third threshold; and in response to detecting a photographing operation, when the brightness value of the environment in which the electronic device is currently located is less than or equal to a fifth threshold, obtain $N_{81}$ frames of eighth images and $N_9$ frames of ninth images, and obtain a taken image based on the $N_{81}$ frames of eighth images and the $N_9$ frames of ninth images; or in response to detecting a photographing operation, when the brightness value of the environment in which the electronic device is currently located is greater than a fifth threshold, obtain $N_{81}$ frames of eighth images, and obtain a taken image based on the $N_{82}$ frames of eighth images.

The eighth image is an image obtained by using a ninth f-number and third exposure time; and the ninth image is an image obtained by using a tenth f-number and fourth exposure time, the tenth f-number is less than the first f-number, and the fourth exposure time is greater than the third exposure time.

FIG. 12 is a diagram of an example structure of an electronic device 700 according to an embodiment of this application.

As shown in FIG. 12, the electronic device includes one or more processors 710 and one or more memories 720. The one or more memories 720 store one or more computer programs, and the one or more computer programs include instructions. When the instructions are run by the one or more processors 710, the electronic device 700 is enabled to perform the photographing method 200. An embodiment of this application provides a computer program product. When the computer program product runs on an electronic device, the electronic device is enabled to perform the photographing method 200. An implementation principle and technical effect thereof are similar to those of the foregoing method-related embodiment. Details are not described herein again.

An embodiment of this application provides a computer-readable storage medium. The computer-readable storage medium includes instructions. When the instructions are run on an electronic device, the electronic device is enabled to perform the photographing method 200. An implementation principle and technical effect thereof are similar. Details are not described herein again.

An embodiment of this application provides a chip. The chip is configured to execute instructions. When the chip runs, the photographing method 200 is performed. An implementation principle and technical effect thereof are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatuses, and units, refer to corresponding processes in the foregoing method embodiment. Details are not described herein again.

In several embodiments provided in this application, it should be understood that the disclosed system, apparatuses and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected according to an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A photographing method, wherein the photographing method is applied to an electronic device, the electronic device is provided with a variable aperture, a default f-number used when the electronic device enables a photo mode is a first f-number, and the photographing method comprises:

    obtaining a preview image, wherein the preview image is an image obtained by using a first ISO, first exposure time, and the first f-number;
    when a proportion of a first area in the preview image is greater than or equal to a first threshold, and a proportion of a second area in the preview image is greater than or equal to a second threshold, adjusting the electronic device to a high dynamic range, HDR photo mode, wherein the first area comprises at least two pixels whose pixel values are greater than a third threshold in the preview image, the second area comprises at least two pixels whose pixel values are less than a fourth threshold in the preview image, and the fourth threshold is less than the third threshold; and

in response to detecting a photographing operation, when the first ISO is a minimum ISO of the electronic device, the first exposure time is minimum exposure time of the electronic device, and a brightness value of an environment in which the electronic device is currently located is greater than or equal to a fifth threshold, obtaining a first image, a second image, and a third image, and obtaining a taken image based on the first image, the second image, and the third image; or

in response to detecting a photographing operation, when the first ISO is a maximum ISO of the electronic device, the first exposure time is maximum exposure time of the electronic device, and a brightness value of an environment in which the electronic device is currently located is less than a sixth threshold, obtaining a second image and a fourth image, and obtaining a taken image based on the second image and the fourth image, wherein

the first image is an image obtained by using a second f-number and second exposure time, and the second f-number is greater than the first f-number;

the second image is an image obtained by using a third f-number and third exposure time, the third exposure time is greater than the second exposure time, and the third f-number is different from the second f-number, a fourth f-number, and a fifth f-number;

the third image is an image obtained by using the fourth f-number and fourth exposure time, the fourth f-number is less than the first f-number, and the fourth exposure time is greater than the third exposure time; and

the fourth image is an image obtained by using the fifth f-number and fifth exposure time, the fifth f-number is less than the first f-number, and the fifth exposure time is greater than the third exposure time.

2. The photographing method according to claim 1, wherein
the third f-number is an f-number corresponding to a brightness value of a focus area in the preview image.

3. The photographing method according to claim 1 or 2, wherein

the fourth f-number is a minimum f-number of the electronic device; or
the fifth f-number is a minimum f-number of the electronic device.

4. The photographing method according to any one of claims 1 to 3, wherein when the first ISO is the minimum ISO of the electronic device, the first exposure time is the minimum exposure time of the electronic device, and the brightness value of the environment in which the electronic device is currently located is greater than or equal to the fifth threshold, a quantity of first images is N1, N1 is greater than or equal to 2, a quantity of second images is N21, N21 is greater than or equal to 2, and a quantity of third images is N3; and the method further comprises:

obtaining status information of the electronic device, wherein the status information indicates whether a photographing status of the electronic device is stable; and
when the status information indicates that the photographing status of the electronic device is stable, determining that N3 is an integer greater than or equal to 2; or
when the status information indicates that the photographing status of the electronic device is unstable, determining that N3 is a positive integer less than or equal to 2.

5. The photographing method according to any one of claims 1 to 4, wherein
the obtaining a taken image based on the first image, the second image, and the third image comprises:
obtaining the taken image based on the first image, the second image, the third image, and a fifth image, wherein the fifth image is an image obtained by using a sixth f-number and sixth exposure time, the sixth f-number is greater than the second f-number, and the sixth exposure time is less than the second exposure time.

6. The photographing method according to claim 5, wherein the sixth f-number is a maximum f-number of the electronic device.

7. The photographing method according to claim 5 or 6, wherein a quantity of fifth images is N5, and N5 is greater than or equal to 2.

8. The photographing method according to any one of claims 1 to 7, wherein
the obtaining a taken image based on the first image, the second image, and the third image comprises:
obtaining the taken image based on the first image, the second image, the third image, and a sixth image, wherein the sixth image is an image obtained by using a seventh f-number and the fourth exposure time, and the seventh f-number is greater than the fourth f-number.

9. The photographing method according to claim 8, wherein a quantity of sixth images is N6, and the method further comprises:

> when the photographing status of the electronic device is stable, determining that N6 is an integer greater than or equal to 2; or
> when the photographing status of the electronic device is unstable, determining that N6 is a positive integer less than or equal to 2.

10. The photographing method according to any one of claims 1 to 3, wherein when the first ISO is the maximum ISO of the electronic device, the first exposure time is the maximum exposure time of the electronic device, and the brightness value of the environment in which the electronic device is currently located is less than the sixth threshold, a quantity of second images is N22, N22 is greater than or equal to 2, and a quantity of fourth images is N4; and the method further comprises:

> when a photographing status of the electronic device is stable, determining that N4 is an integer greater than or equal to 2; or
> when a photographing status of the electronic device is unstable, determining that N4 is equal to 1.

11. The photographing method according to any one of claims 1 to 10, wherein
the obtaining a taken image based on the second image and the fourth image comprises:
obtaining the taken image based on the second image, the fourth image, and a seventh image, wherein the seventh image is an image obtained by using an eighth f-number and the fifth exposure time, and the eighth f-number is greater than the fifth f-number.

12. The photographing method according to claim 11, wherein a quantity of seventh images is N7, and the method further comprises:
when the photographing status of the electronic device is unstable, determining that N7 is equal to 1.

13. A photographing method, wherein the photographing method is applied to an electronic device, the electronic device is provided with a variable aperture, a default f-number used when the electronic device enables a photo mode is a first f-number, and the photographing method comprises:

> obtaining a preview image, wherein the preview image is an image obtained by using the first f-number;
> when a proportion of a first area in the preview image is less than a first threshold, and/or a proportion of a second area in the preview image is less than a second threshold, adjusting the electronic device to a non-high dynamic range HDR photo mode, wherein the first area comprises at least two pixels whose pixel values are greater than a third threshold in the preview image, the second area comprises at least two pixels whose pixel values are less than a fourth threshold in the preview image, and the fourth threshold is less than the third threshold; and

in response to detecting a photographing operation, when a brightness value of an environment in which the electronic device is currently located is less than or equal to a fifth threshold, obtaining an eighth image and a ninth image, and obtaining a taken image based on the eighth image and the ninth image; or
in response to detecting a photographing operation, when a brightness value of an environment in which the electronic device is currently located is greater than a fifth threshold, obtaining an eighth image, and obtaining a taken image based on the eighth image, wherein
the eighth image is an image obtained by using a ninth f-number and third exposure time; and
the ninth image is an image obtained by using a tenth f-number and fourth exposure time, the tenth f-number is less than the first f-number, and the fourth exposure time is greater than the third exposure time.

14. The photographing method according to claim 13, wherein

> the tenth f-number is a minimum f-number of the electronic device; or
> the ninth f-number is an f-number corresponding to a brightness value of a focus area in the preview image.

15. The photographing method according to claim 13 or 14, wherein when the brightness value of the environment in which the electronic device is currently located is less than or equal to the fifth threshold, a quantity of eighth images is N81, N81 is greater than or equal to 2, and a quantity of ninth images is N9; and the method further comprises:

> obtaining status information of the electronic device, wherein the status information indicates whether a photographing status of the electronic device is stable; and
> when the status information indicates that the photographing status of the electronic device is stable, determining that N9 is an integer greater than or equal to 2; or
> when the status information indicates that the photographing status of the electronic device is unstable, determining that N9 is a positive integer less than or equal to 2.

16. The photographing method according to any one of claims 13 to 15, wherein
the obtaining a taken image based on the eighth image and the ninth image comprises:
obtaining the taken image based on the eighth image, the ninth image, and a tenth image, wherein the tenth image is an image obtained by using an eleventh f-number and the fourth exposure time, and the eleventh f-number is greater than the tenth f-number.

17. The photographing method according to claim 16, wherein a quantity of tenth images is N10, and the method further comprises:

when the status information indicates that the photographing status of the electronic device is stable, determining that N10 is an integer greater than or equal to 2; or
when the status information indicates that the photographing status of the electronic device is unstable, determining that N10 is a positive integer less than or equal to 2.

18. An electronic device, comprising a module configured to perform the photographing method according to any one of claims 1 to 17.

19. An electronic device, comprising:

one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the photographing method according to any one of claims 1 to 17.

20. A computer-readable storage medium, comprising computer instructions, wherein when the computer instructions are run on an electronic device, the electronic device is enabled to perform the photographing method according to any one of claims 1 to 17.

Electronic device 100

FIG. 1

| Application layer | Camera | Calendar | Maps | WLAN | Music | Messages |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | |
|---|---|---|---|
| | Two-dimensional graphics engine | Media library | ... |

| Kernel layer | Display driver | Camera driver | |
|---|---|---|---|
| | Audio driver | Sensor driver | ... |

FIG. 2

(a)                           (b)                           (c)

FIG. 3

200

S210: Obtain a preview image and ambient brightness information

S220: Determine, based on a proportion of a first area and a proportion of a second area in the preview image, whether to adjust an electronic device to an HDR photo mode

Y

N

S230a: Adjust the electronic device to the HDR photo mode

S240a: Determine whether a photographing scene of the preview image is a common scene

Y

N

Common scene

S280a: Determine whether the photographing scene of the preview image is an extremely bright scene or an extremely dark scene

Extremely bright scene

Extremely dark scene

S290a: Determine a second frame output strategy

S320a: Determine a third frame output strategy

S300a: Obtain frames of images according to the second frame output strategy in response to detecting a photographing operation

S330a: Obtain frames of images according to the third frame output strategy in response to detecting a photographing operation

S310a: Process the frames of images to obtain a taken image

S340a: Process the frames of images to obtain a taken image

S250a: Determine a first frame output strategy

S230b: Adjust the electronic device to a non-HDR photo mode

TO FIG. 4B

TO FIG. 4B

FIG. 4A

CONT.
FROM
FIG. 4A

CONT.
FROM
FIG. 4A

S260a: Obtain frames of images according to the first frame output strategy in response to detecting a photographing operation

S240b: Determine that the photographing scene of the preview image is a night scene or a non-night scene

S270a: Process the frames of images to obtain a taken image

Non-night scene

Night scene

S280b: Determine a fifth frame output strategy

S250b: Determine a fourth frame output strategy

S290b: Obtain frames of images according to the fifth frame output strategy in response to detecting a photographing operation

S260b: Obtain frames of images according to the fourth frame output strategy in response to detecting a photographing operation

S300b: Process the frames of images to obtain a taken image

S270b: Process the frames of images to obtain a taken image

FIG. 4B

FIG. 5

FIG. 6

FIG. 7

FIG. 8

FIG. 9

FIG. 10

Electronic device 600

Obtaining unit 610

Processing unit 620

FIG. 11

Electronic device 700

Processor 710

Memory 720

Bus

FIG. 12

## INTERNATIONAL SEARCH REPORT

| International application No. |
|---|
| **PCT/CN2023/118826** |

**A.    CLASSIFICATION OF SUBJECT MATTER**

H04N23/667(2023.01)i;   H04N23/63(2023.01)i;   H04N23/741(2023.01)i

According to International Patent Classification (IPC) or to both national classification and IPC

**B.    FIELDS SEARCHED**

Minimum documentation searched (classification system followed by classification symbols)

IPC: H04N23/-

Documentation searched other than minimum documentation to the extent that such documents are included in the fields searched

Electronic data base consulted during the international search (name of data base and, where practicable, search terms used)

CNTXT; CNKI: 亮, 光源, 过曝, 暗, 欠曝, 占比, 比例, 面积, HDR, 动态范围, 曝光, 长, 短, 中, 正常, 光圈, 感光, 最大, 最小, 环境, 场景, 亮度, 夜景, 夜晚, 晚上; VEN; ENTXT; IEEE: bright, overexpose, dark, underexpose, proportion, ratio, aera, HDR, exposure, long, short, medium, normal, aperture, maximum, minimum, environment, scene, night

**C.    DOCUMENTS CONSIDERED TO BE RELEVANT**

| Category* | Citation of document, with indication, where appropriate, of the relevant passages | Relevant to claim No. |
|---|---|---|
| PX | CN 115767262 A (HUAWEI TECHNOLOGIES CO., LTD.) 07 March 2023 (2023-03-07) claims 1-20 | 1-20 |
| A | CN 108391059 A (HUAWEI TECHNOLOGIES CO., LTD.) 10 August 2018 (2018-08-10) description, paragraphs [0072]-[0073] and [0085]-[0177], and figure 2 | 1-20 |
| A | CN 103516984 A (GUANGDONG OPPO MOBILE TELECOMMUNICATIONS CO., LTD.) 15 January 2014 (2014-01-15) entire document | 1-20 |
| A | CN 110445989 A (OPPO GUANGDONG MOBILE TELECOMMUNICATIONS CO., LTD.) 12 November 2019 (2019-11-12) entire document | 1-20 |
| A | CN 109496425 A (HUAWEI TECHNOLOGIES CO., LTD.) 19 March 2019 (2019-03-19) entire document | 1-20 |
| A | CN 103973988 A (HUAWEI DEVICE CO., LTD.) 06 August 2014 (2014-08-06) entire document | 1-20 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 November 2023** | **13 November 2023** |

| Name and mailing address of the ISA/CN | Authorized officer |
|---|---|
| **China National Intellectual Property Administration (ISA/ CN)** China No. 6, Xitucheng Road, Jimenqiao, Haidian District, Beijing 100088 | |
| | Telephone No. |

Form PCT/ISA/210 (second sheet) (July 2022)

**INTERNATIONAL SEARCH REPORT**

| International application No. |
| --- |
| **PCT/CN2023/118826** |

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2021082580 A1 (MEGVII (BEIJING) TECHNOLOGY CO., LTD.) 06 May 2021 (2021-05-06)<br>      entire document | 1-20 |

Form PCT/ISA/210 (second sheet) (July 2022)

INTERNATIONAL SEARCH REPORT
Information on patent family members

International application No.

**PCT/CN2023/118826**

| Patent document cited in search report | | | Publication date (day/month/year) | Patent family member(s) | | | Publication date (day/month/year) |
|---|---|---|---|---|---|---|---|
| CN | 115767262 | A | 07 March 2023 | None | | | |
| CN | 108391059 | A | 10 August 2018 | WO | 2019179179 | A1 | 26 September 2019 |
| | | | | US | 2020068108 | A1 | 27 February 2020 |
| | | | | US | 11140329 | B2 | 05 October 2021 |
| | | | | US | 2022006937 | A1 | 06 January 2022 |
| | | | | US | 11563897 | B2 | 24 January 2023 |
| | | | | EP | 3599760 | A1 | 29 January 2020 |
| | | | | EP | 3599760 | A4 | 13 May 2020 |
| | | | | EP | 3599760 | B1 | 08 February 2023 |
| | | | | CN | 111684788 | A | 18 September 2020 |
| | | | | VN | 74827 | A | 25 December 2020 |
| | | | | IN | 202027033370 | A | 02 October 2020 |
| CN | 103516984 | A | 15 January 2014 | None | | | |
| CN | 110445989 | A | 12 November 2019 | CN | 110445989 | B | 23 March 2021 |
| CN | 109496425 | A | 19 March 2019 | AU | 2022200580 | A1 | 17 February 2022 |
| | | | | AU | 2022200580 | B2 | 01 December 2022 |
| | | | | EP | 4246995 | A2 | 20 September 2023 |
| | | | | EP | 4246995 | A3 | 04 October 2023 |
| | | | | US | 2022201222 | A1 | 23 June 2022 |
| | | | | BR | 112020019324 | A2 | 05 January 2021 |
| | | | | BR | 112020019324 | A8 | 30 August 2022 |
| | | | | US | 2020128191 | A1 | 23 April 2020 |
| | | | | US | 11070743 | B2 | 20 July 2021 |
| | | | | WO | 2019183819 | A1 | 03 October 2019 |
| | | | | KR | 20200019728 | A | 24 February 2020 |
| | | | | KR | 102385841 | B1 | 11 April 2022 |
| | | | | KR | 20210109059 | A | 03 September 2021 |
| | | | | KR | 102381713 | B1 | 01 April 2022 |
| | | | | BR | 122022006221 | A2 | 05 January 2021 |
| | | | | BR | 122022006221 | A8 | 30 August 2022 |
| | | | | US | 2021168302 | A1 | 03 June 2021 |
| | | | | US | 11330194 | B2 | 10 May 2022 |
| | | | | AU | 2018415738 | A1 | 17 September 2020 |
| | | | | AU | 2018415738 | B2 | 28 October 2021 |
| | | | | ES | 2946587 | T3 | 21 July 2023 |
| | | | | RU | 2769759 | C1 | 05 April 2022 |
| | | | | JP | 2020527000 | A | 31 August 2020 |
| | | | | JP | 6834056 | B2 | 24 February 2021 |
| | | | | EP | 3633975 | A1 | 08 April 2020 |
| | | | | EP | 3633975 | A4 | 29 July 2020 |
| | | | | EP | 3633975 | B1 | 10 May 2023 |
| | | | | JP | 2021100249 | A | 01 July 2021 |
| | | | | JP | 7169383 | B2 | 10 November 2022 |
| CN | 103973988 | A | 06 August 2014 | WO | 2014114223 | A1 | 31 July 2014 |
| | | | | JP | 2015532070 | A | 05 November 2015 |
| | | | | JP | 6160004 | B2 | 12 July 2017 |
| | | | | US | 2015110356 | A1 | 23 April 2015 |
| | | | | US | 9530054 | B2 | 27 December 2016 |
| | | | | US | 2017083767 | A1 | 23 March 2017 |

Form PCT/ISA/210 (patent family annex) (July 2022)

INTERNATIONAL SEARCH REPORT
Information on patent family members

International application No.

**PCT/CN2023/118826**

| Patent document cited in search report | | | Publication date (day/month/year) | Patent family member(s) | | | Publication date (day/month/year) |
|---|---|---|---|---|---|---|---|
| | | | | US | 9934438 | B2 | 03 April 2018 |
| | | | | EP | 2854389 | A1 | 01 April 2015 |
| | | | | EP | 2854389 | A4 | 07 October 2015 |
| | | | | EP | 2854389 | B1 | 30 May 2018 |
| | | | | CN | 103973988 | B | 02 February 2018 |
| WO | 2021082580 | A1 | 06 May 2021 | CN | 110611750 | A | 24 December 2019 |
| | | | | CN | 110611750 | B | 22 March 2022 |

Form PCT/ISA/210 (patent family annex) (July 2022)

**REFERENCES CITED IN THE DESCRIPTION**

**Patent documents cited in the description**

- CN 202211350498